(19) Europäisches Patentamt
European Patent Office
Office européen des brevets

(11) **EP 2 303 969 B1**

(12) **EUROPÄISCHE PATENTSCHRIFT**

(45) Veröffentlichungstag und Bekanntmachung des Hinweises auf die Patenterteilung:
**05.12.2012 Patentblatt 2012/49**

(51) Int Cl.:
*C09C 1/00* *(2006.01)*   *C09C 1/62* *(2006.01)*
*C09C 1/64* *(2006.01)*

(21) Anmeldenummer: **09768999.6**

(22) Anmeldetag: **25.06.2009**

(86) Internationale Anmeldenummer:
**PCT/EP2009/004583**

(87) Internationale Veröffentlichungsnummer:
**WO 2009/156150 (30.12.2009 Gazette 2009/53)**

(54) **MISCHUNG AUS DÜNNEN EISEN- UND ALUMINIUMEFFEKTPIGMENTEN, VERFAHREN ZU DEREN HERSTELLUNG UND DEREN VERWENDUNG**

MIXTURE OF THIN IRON AND ALUMINIUM EFFECT PIGMENTS, PROCESS FOR PREPARATION THEREOF AND USE THEREOF

MÉLANGE DE PIGMENTS MINCES DE FER ET D'ALUMINIUM À EFFET, SON PROCÉDÉ DE FABRICATION ET SON UTILISATION

(84) Benannte Vertragsstaaten:
**AT BE BG CH CY CZ DE DK EE ES FI FR GB GR HR HU IE IS IT LI LT LU LV MC MK MT NL NO PL PT RO SE SI SK TR**

(30) Priorität: **25.06.2008 DE 102008029820**

(43) Veröffentlichungstag der Anmeldung:
**06.04.2011 Patentblatt 2011/14**

(73) Patentinhaber: **Eckart GmbH**
**91235 Hartenstein (DE)**

(72) Erfinder:
• **TRUMMER, Stefan**
**90480 Nürnberg (DE)**
• **SCHLEGL, Thomas**
**91245 Simmelsdorf (DE)**

(74) Vertreter: **Louis Pöhlau Lohrentz**
**Patentanwälte**
**Postfach 30 55**
**90014 Nürnberg (DE)**

(56) Entgegenhaltungen:
**WO-A-2005/028573      WO-A-2005/111152**
**DE-A1- 10 315 775      DE-A1-102006 006 716**

EP 2 303 969 B1

**Beschreibung**

Die Erfindung betrifft eine Mischung von Metalleffektpigmenten, ein Verfahren zu deren Herstellung sowie deren Verwendung.

Eiseneffektpigmente bzw. plättchenförmige Eisenpigmente sind aus der EP 1 251 152 A1 und der EP 1 251 153 A1 bekannt. Diese Eiseneffektpigmente werden aus Carbonyleisengrieß durch Vermahlung in Kugelmühlen hergestellt und es können mittlere Pigmentdicken im Bereich von bis zu 30 nm erreicht werden.

Die Eiseneffektpigmente weisen einen starken Helligkeitsflop, d.h. eine winkelabhängige Änderung der Helligkeit, auf. Die Farbe von entsprechenden Volltonapplikationen ist jedoch aufgrund der relativ geringen Reflexion von Eiseneffektpigmenten im optischen Wellenlängenbereich auf sehr dunkle Farbtöne beschränkt. Aus diesem Grunde haben entsprechende Eiseneffektpigmentprodukte bisher wenig Anklang in der Lack- und Druckfarbenindustrie gefunden.

Auch bei den in der Druckindustrie sehr gefragten sogenannten "Konterapplikationen", bei denen man mittels durch PVD-Verfahren hergestellter Aluminiumeffektpigmente Spiegeleffekte erzielen kann, werden Eiseneffektpigmente nicht verwendet.

Die Eiseneffektpigmente sind aufgrund ihres üblicherweise hohen Formfaktors, d.h. dem Verhältnis von Pigmentdurchmesser zu Pigmentdicke, sehr gut in magnetischen Feldern ausrichtbar. Legt man an das Substrat oder unter das Substrat, auf das die Eiseneffektpigmente appliziert werden, ein Magnetfeld an, so können durch die erzeugten Magnetfelder Bereiche auf dem Substrat hervorgerufen werden, in denen die Eiseneffektpigmente mit der Pigmentfläche parallel zur Substratoberfläche, senkrecht zur Substratoberfläche oder in beliebigen Zwischenpositionen orientiert werden.

Derartige Beschichtungen sind in allgemeiner Form in der US 5,630,877 beschrieben worden.

Die Eiseneffektpigmente orientieren sich dabei entlang der magnetischen Feldlinien. Durch das Aushärten des Applikationsmediums, beispielsweise eines Lackes oder einer Farbe, werden die im Magnetfeld ausgerichteten Eiseneffektpigmente in der jeweiligen Position fixiert. Auf diese Weise können dreidimensional anmutende, sehr attraktive Muster erzeugt werden. Dabei erscheinen die Bereiche, in denen die plättchenförmigen Eisenpigmente durch das Magnetfeld ausgerichtet sind, als sehr dunkel und die Bereiche mit nicht ausgerichteten Pigmenten als vergleichsweise hell. Jedoch sind diese helleren Bereiche aufgrund der geringen Reflexion der Eiseneffektpigmente, verglichen mit Aluminiumeffektpigmenten, auch noch relativ dunkel.

Weitere eisenhaltige Metalleffektpigmente sind in der EP 0 673 980 offenbart.

Aluminiumeffektpigmente, die durch PVD-Verfahren hergestellt werden, sind seit ungefähr 20 Jahren kommerziell erhältlich. Sie stellen die optisch hochwertigsten Alurminiumeffektpigmente dar. Diese PVD-Pigmente weisen üblicherweise mittlere Dicken unter 60 nm und relativ enge Dickenverteilungen auf. Die Pigmentoberflächen sind aufgrund der Herstellung über PVD-Verfahren sehr glatt und gleichmäßig.

Kommerziell erhältliche Produkte sind beispielsweise Metalure® (Fa. Avery, Vertrieb Fa. Eckart), Metasheen® (Fa. Ciba Specialities), Decomet® (Fa. Schlenk) oder Starbrite® (Fa. Silberline).

Fertige Druckfarbe enthaltend PVD-Aluminiumpigmente werden von der Fa. Eckart unter dem Handelsname Ultra Star® angeboten.

Die vorgenannten Aluminiumeffektpigmente werden aufgrund ihrer starken Neigung zur Agglomeration als verdünnte Dispersionen in organischen Lösemitteln mit einem Pigmentgehalt von nur 5 bis maximal 20 Gew.-% im Handel angeboten. Mithin weisen diese Angebotsformen einen sehr hohen Anteil an organischen Lösemitteln auf. Dies ist hinsichtlich der weltweiten Bemühungen um eine VOC-Reduzierung ein deutlicher Nachteil dieser Pigmente.

Die US 2003/0178734 A1 beschreibt ein verbessertes Herstellungsverfahren zur Herstellung von PVD-Aluminiumpigmenten.

Zunehmend werden im Markt jedoch dunkle metallische Effektpigmente nachgefragt. Dabei reicht die Palette von sehr dunklen Pigmenten ("schwarz") bis zu leicht abgetönten, dunkleren Pigmenten. Der Helligkeitsflop - eines der Charakteristika von Metalleffektpigmenten - soll einen "dunklen" Eindruck beim Betrachter hervorrufen, wobei es erwünscht ist, dass das Metalleffektpigment nach der Aufbringung, beispielsweise als Lack, Farbe oder Druckfarbe, noch einen möglichst hohen Glanz aufweist.

Die klassischen Aluminiumeffektpigmente sind hierfür mit ihrem silberfarbenen Erscheinungsbild zu hell. Insbesondere sind die hochwertigen PVD-Aluminiumpigmente zu hell.

Mischt man Aluminiumeffektpigmente mit konventionellen schwarzen Pigmenten wie beispielsweise Ruß, so können dunkle metallische Effekte erzielt werden. Ein großer Nachteil bei dieser Vorgehensweise ist, dass mit steigender Menge an Schwarzpigmenten ein zunehmender Glanzverlust aufgrund von Streueffekten durch die schwarzen Pigmente auftritt.

In Fall von sehr dünnen PVD-Aluminiumeffektpigmenten, bei denen die mittlere Schichtdicke der Pigmente weniger als ca. 30 nm oder 20 nm beträgt, können dunklere metallische Farbtöne hergestellt werden. Diese äußerst dünnen Aluminiumeffektpigmente verlieren mit abnehmender Schichtdicke ihre vollkommene Opazität und werden teilweise transparent. Aufgrund der sodann erfolgenden extrem hohen Absorption optischer Strahlung durch das Aluminium werden die Pigmente zunehmend dunkel.

Jedoch ist die Palette möglicher "Farbtöne" auf diese Weise eng begrenzt. Zudem können sehr dünne Aluminiumeffektpigmente mechanisch sehr anfällig sein und sind in der Herstellung sehr kostenintensiv.

So sind beispielsweise in der DE 10 2004 063 433 A1 Metalleffektpigmente mit einem dreischichtigen Aufbau beschrieben worden, die auf derartig dünnen Metalleffektpigmenten beruhen, wobei beidseitig auf der zentralen dünnen Metallschicht dielektrische Schichten aufgebracht sind. Diese Effektpigmente mit dreischichtigem Aufbau sind jedoch nur sehr aufwendig herzustellen und verlieren aufgrund der zunehmenden Transparenz an spezifischer Deckkraft, d.h. Deckvermögen pro Gewichtseinheit an Pigment.

Aus der EP 1 621 586 A1 sind Aluminiumeffektpigmente mit einem Pigmentdurchmesser $d_{50}$ aus einem Bereich von 8 $\mu$m bis 30 $\mu$m sowie mittleren Dicken von 25 bis 80 nm bekannt, die durch Naßvermahlung hergestellt werden. Diese durch Verformungsvermahlung erhaltenen Aluminiumeffektpigmente kommen in ihren optischen Eigenschaften Aluminium PVD-Pigmenten in ihren optischen Eigenschaften und ihren Dicken sehr nahe.

Aus der WO 2004/087816 A2 sind ebenfalls sehr dünne Aluminiumpigmente bekannt, die durch Vermahlung hergestellt werden. Die Pigmente weisen einen Span der Dickenverteilung von 70 bis 140 % auf. In ihren optischen Eigenschaften stehen diese Pigmente zwischen den PVD-Pigmenten und den sogenannten "Silberdollar"-Pigmenten, die durch herkömmliche Vermahlung von Aluminiumgrieß erhaltene Aluminiumeffektpigmente sind.

Weiterhin sind aus der WO 2005/118722 A1 dünne, durch Vermahlung hergestellte Aluminiumpigmente bekannt, die mit einer anorganischen Korrosionsschutzschicht versehen sind.

Entsprechende Produkte werden von der Fa. Eckart unter dem Handelsnamen Silvershine® angeboten.

Die DE 10 2006 006 716 A1 offenbart ein Kosmetikum, das ein oder mehrere Effektpigmente enthält. Die DE 103 15 775 A1 offenbart dünne deckende Aluminiumpigmente.

Aufgabe der vorliegenden Erfindung ist es, metallische Effektpigmente mit hohem Glanz, der dem von Aluminiumeffektpigmenten nahe kommt, und einer dunkleren Eigenfarbe und einem dunkleren Helligkeitsflop, bezogen auf Aluminiumeffektpigmente, bereitzustellen.

Insbesondere sollen bei einer Konterapplikation hochglänzende Metallspiegel erreicht werden können, die jedoch eine dunklere Eigenfarbe und einen dunkleren Flop, bezogen auf Aluminiumeffektpigmente, aufweisen.

Weiterhin ist es erwünscht, dass die metallischen Effektpigmente die Erzeugung von "holographischen" oder räumlich wirkenden Effekten ermöglichen.

Die der vorliegenden Erfindung zugrundeliegende Aufgabe wird durch Bereitstellung einer Mischung von Metalleffektpigmenten gelöst, wobei die Mischung eisenhaltige Metalleffektpigmente und Aluminiumeffektpigmente umfasst, wobei die eisenhaltigen Metalleffektpigmente bei einer über Dickenauszählung mit Rasterelektronenmikroskopie (REM) ermittelten Dickenverteilung in der Darstellung als Summenhäufigkeitsverteilung einen $h_{Fe.50}$-Wert aus einem Bereich von 10 bis 200 nm aufweisen.

Bevorzugte Weiterbildungen der Erfindung sind in den Unteransprüchen 2 bis 12 angegeben.

Die der Erfindung zugrundeliegende Aufgabe wird auch durch die Bereitstellung eines Verfahrens gelöst, wobei das Verfahren den Schritt umfasst:

Mischen von eisenhaltigen Metalleffektpigmenten, die bei einer **über** Dickenauszählung mit Rasterelektronenmikroskopie (REM) ermittelten Dickenverteilung in der Darstellung als Summenhäufigkeitsverteilung einen $h_{Fe,50}$-Wert aus einem Bereich von 10 bis 200 nm aufweisen, mit Aluminiumeffektpigmenten.

Die Aufgabe der Erfindung wird auch durch die Verwendung der erfindungsgemäßen Mischung von Metalleffektpigmenten in Druckfarben, vorzugsweise Sieb-, Flexo-, Tiefdruckfarben und Sicherheitsdruckfarben, Coatings, kosmetischen Formulierungen, Kunststoffen, Keramiken und Gläsern gelöst.

Des weiteren wird die der Erfindung zugrundeliegende Aufgabe durch Bereitstellung einer Formulierung, enthaltend eine Mischung von Metalleffektpigmenten nach einem der Ansprüche 1 bis 12, sowie eines beschichteten Gegenstandes, wobei der Gegenstand mit einer Mischung von Metalleffektpigmenten nach einem der Ansprüche 1 bis 12 oder mit einer Formulierung nach Anspruch 16 versehen ist oder diese enthält, gelöst.

Die Erfinder haben überraschend herausgefunden, dass es möglich ist, einen Metalleffekt mit hohem Glanz und dunklerem Farbflop zu erzeugen, wenn eisenhaltige Effektpigmente und Aluminiumeffektpigmente miteinander gemischt werden und die eisenhaltigen Metalleffektpigmente bei einer über Dickenauszählung mit Rasterelektronenmikroskopie (REM) ermittelten Dickenverteilung in der Darstellung als Summenhäufigkeitsverteilung einen $h_{Fe,50}$-Wert aus einem Bereich von 10 bis 200 nm aufweisen.

Im Rahmen dieser Erfindung wurde die Dickenverteilung der Metalleffektpigmente mittels Rasterelektronenmikroskopie (REM) bestimmt. Bei dieser Methode sind so viele Teilchen zu vermessen, dass eine repräsentative statistische Auswertung vorgenommen werden kann. Üblicherweise werden etwa ca. 100 Teilchen vermessen.

Die Dickenverteilung wird zweckmäßigerweise in Form einer Summenhäufigkeitsverteilungskurve dargestellt.

Als Mittelwert bietet sich der $h_{50}$-Wert der Summenhäufigkeitsverteilung an. Ein Maß für den Grobanteil ist der $h_{90}$-Wert. Er besagt, dass 90 % aller Pigmentteilchen eine Dicke gleich diesem Wert und/öder unterhalb dieses Wertes besitzen. Entsprechend besagt beispielsweise ein $h_{98}$-Wert, dass 98 % aller Pigmentteilchen eine Dicke gleich diesem Wert und/ oder unterhalb dieses Wertes besitzen. In analoger Weise der $h_{10}$-Wert ein Maß für den Feinanteil der Dickenverteilung, der besagt, dass 10 % aller Pigmentteilchen eine Dicke gleich diesem Wert und/oder unterhalb dieses Wertes besitzen.

Diese Werte können rechnerisch aus einer Liste der gemessenen Einzelwerte ermittelt werden, so z.B. mit Hilfe der "Quantil"-Funktion in einer Excel-Darstellung. Die Ermittlung der Dicken der einzelnen Pigmente mittels REM erfolgt nach der in der DE 103 15 775 A1 beschriebenen Methode.

Die Kombination von Glanz und gleichzeitig dunklem Farbflop konnte bislang nicht in zufriedenstellender Weise erzeugt werden.

Des weiteren ermöglicht die erfindungsgemäße Mischung von Metalleffektpigmenten überraschenderweise die Erzeugung von räumlich wirkenden Effekten in einem Medium, beispielsweise einem Lack, einer Farbe, einer Druckfarbe, einem Kunststoff, einem Kosmetikum, etc..

Der räumlich wirkende Effekt kann hologrammähnlich sein und/oder sich durch eine Tiefenwirkung auszeichnen.

Die eisenhaltigen Metalleffektpigmente, vorzugsweise Eiseneffektpigmente, sind magnetisierbar und lassen sich durch Anlegen eines Magnetfeldes ausrichten, wie dies beispielsweise auch bei Eisenfeilspänen der Fall ist. Die eisenhaltigen Metalleffektpigmente in der erfindungsgemäßen Mischung von Metalleffektpigmenten richten sich im Magnetfeld so aus, dass die Plättchenfläche parallel zu den magnetischen Feldlinien orientiert ist.

Die Aluminiumeffektpigmente sind nicht magnetisch und werden mithin in ihrer Orientierung oder Ausrichtung nicht von einem angelegten Magnetfeld beeinflusst. Die Aluminiumeffektpigmente orientieren sich aufgrund ihrer Plättchenform parallel zur Substratoberfläche.

Es ist mithin möglich, dass die Aluminiumeffektpigmente mit ihrer Pigmentfläche parallel zur Substratoberfläche in einem Applikationsmedium ausgerichtet sind und die eisenhaltigen Metalleffektpigmente mit ihrer Pigmentoberfläche senkrecht oder unter einem bestimmten Winkel in dem Applikationsmedium zur Substratoberfläche ausgerichtet sind. Aufgrund der unterschiedlichen Orientierung der Pigmentoberflächen der Aluminiumeffektpigmente und der eisenhaltigen Metalleffektpigmente, vorzugsweise Eiseneffektpigmente, wird einfallendes Licht in Abhängigkeit von der jeweiligen Ausrichtung der Effektpigmente im Applikationsmedium unterschiedlich stark reflektiert, wodurch interessante optische Effekte erzeugt werden können.

So können beispielsweise unter Verwendung eines Magneten mit fokussiertem Magnetfeld Muster in der in einem Applikationsmedium auf einem Substrat aufgebrachten Metalleffektpigmentmischung erzeugt werden, die einen Tiefeneffekt aufweisen.

Beispielsweise können bei den einem Magnetfeld ausgesetzten Bereichen des Applikationsmediums die parallel zur Substratoberfläche ausgerichteten Aluminiumeffektpigmente eine starke und helle Reflexion des einfallenden Lichtes bewirken, wobei die benachbart angrenzenden Bereiche, die keinem Magnetfeld ausgesetzt sind und in denen keine von der Ausrichtung der Aluminiumeffektpigmente verschiedene Ausrichtung der eisenhaltigen Metalleffektpigmente, vorzugsweise Eiseneffektpigmente, bewirkt wurde, eine weniger starke und dunklere Reflexion von einfallendem Licht bewirken. Hierdurch kann ein Muster erzeugt werden, das Tiefenwirkung aufweisen kann.

Die Ausrichtung der eisenhaltigen Metalleffektpigmente, vorzugsweise Eiseneffektpigmente, erfolgt dabei durch Anlegen eines Magnetfeldes an das noch nicht ausgehärtete Applikationsmedium. Nach Härtung oder Trocknung des Applikationsmediums werden die ausgerichteten oder orientierten Metalleffektpigmente fixiert, so dass der optische Effekt erhalten bleibt.

Die erfindungsgemäße Mischung von eisenhaltigen Metalleffektpigmenten und Aluminiumeffektpigmenten ermöglicht mithin die Erzeugung verschiedenster optischer Effekte.

Wenn die eisenhaltigen Effektpigmente nicht durch Anlegung eines Magnetfeldes ausgerichtet werden, orientieren sich die eisenhaltigen Metalleffektpigmente zusammen mit den Aluminiumeffektpigmenten in einem Applikationsmedium im Wesentlichen parallel zur Substratoberfläche.

Nach Aushärtung und/oder Trocknung des Applikationsmediums weist dieses bei hellem Glanz einen dunklen Farbflop auf. Die erfindungsgemäße Mischung von Metalleffektpigmenten eignet sich insbesondere zur Verwendung in einem Lack, beispielsweise zur Lackierung von Karosserien. Bei einer weiteren bevorzugten Verwendung wird die erfindungsgemäße Mischung von eisenhaltigen Metalleffektpigmenten und Aluminiumeffektpigmenten in Druckfarben verwendet, beispielsweise bei den sogenannten Konterapplikationen. Bei einer Konterapplikation wird das Applikationsmedium, das die erfindungsgemäße Mischung von Metalleffektpigmenten enthält, auf ein transparentes Substrat, beispielsweise eine Folie, aufgebracht, wobei bei der späteren Verwendung die bedruckte Folienseite von der Rückseite, d.h. durch die Folie, dem Auge des Betrachters zugewandt ist.

Unter Metalleffektpigmenten werden im Rahmen dieser Erfindung immer plättchenförmige Metallpigmente verstanden. Dabei beträgt der Formfaktor, d.h. das Verhältnis der mittleren Pigmentgröße bzw. des mittleren Pigmentdurchmessers $(d_{50})$ zur mittleren Dicke $(h_{50})$ 2 bis 5.000, bevorzugt 10 bis 3.000, weiter bevorzugt 20 bis 2.000 und besonders bevorzugt 50 bis 1.000.

Die beiden Metalleffektpigmente der erfindungsgemäßen Metalleffektpigmentmischung weisen generell unterschiedliche Eigenschaften auf. Die silberfarbenen Aluminiumeffektpigmente sind aufgrund der hohen Reflektivität von Aluminium im optischen Bereich des elektromagnetischen Spektrums (400 bis 800 nm) sehr hell. Aluminiumeffektpigmente besitzen eine geringe Dichte von ca. 2,5 g/cm$^3$.

Die eisenhaltigen Metalleffektpigmente haben aufgrund ihrer geringeren Reflektivität ein eher dunkleres, graueres Erscheinungsbild. Unter eisenhaltigen Metalleffektpigmenten wird vorzugsweise ein Anteil von mindestens 20 Gew.-% an Eisen in Bezug auf das Gesamtgewicht dieses Pigments verstanden. Gemäß einer bevorzugten Weiterbildung beträgt der Gehalt an Eisen, bezogen auf das Gesamtgewicht, wenigstens 40 Gew.-%, weiter bevorzugt wenigstens 60 Gew.-%, noch weiter bevorzugt wenigstens 75 Gew.-%. Dabei bezieht sich die Angabe in Gew.% auf metallisches Eisen, d.h. Eisenoxidbeschichtungen werden nicht von der vorgenannten Angabe erfasst.

Als eisenhaltige Metalleffektpigmente kommen beispielsweise Stahlplättchen sowie Eiseneffektpigmente in Frage, wobei Eiseneffektpigmente besonders bevorzugt sind. Letztere haben auch zusätzlich den Vorteil, dass sie sehr gut in magnetischen Feldern ausrichtbar sind.

Die eisenhaltigen Metalleffektpigmente haben wesentlich höhere Dichten, beispielsweise von ca. 7,7 g/cm$^3$, als die Aluminiumeffektpigmente.

Es hat sich überraschenderweise herausgestellt, dass diese beiden Metalleffektpigmente sich in Mischungen sehr gut in ihren optischen Eigenschaften ergänzen. Auf überraschend einfache Weise können so glänzende Metalleffektpigmente bzw. eine Mischung aus Metalleffektpigmenten mit einem attraktiven "dunklen" Helligkeitsflop bereitgestellt werden. Durch Auswahl von Aluminium- bzw. eisenhaltigen Metalleffektpigmenten, vorzugsweise Eiseneffektpigmenten, mit bestimmten Größen und Dicken sowie vor allem des Mischungsverhältnisses können ein große Vielzahl unterschiedlichster metallischer Farbtöne realisiert werden.

Der Anteil von eisenhaltigen Metalleffektpigmenten, bezogen auf das Gesamtgewicht an eisenhaltigen- und Aluminiumeffektpigmenten, beträgt vorzugsweise 5 bis 95 Gew.-%, bevorzugt 10 bis 90 Gew.%, weiter bevorzugt 15 bis 85 Gew.% und besonders bevorzugt 20 bis 80 Gew.-%. Unterhalb eines Anteils von 5 Gew.% an eisenhaltigen Metalleffektpigmenten können die Unterschiede zu einem reinen Aluminiumeffektpigment zu gering sein. Oberhalb eines Anteils von 95 Gew.-% können die Unterschiede zu dem reinen eisenhaltigen Metalleffektpigment ebenfalls zu gering sein.

Der Anteil an Aluminiumeffektpigment, bezogen auf das Gesamtgewicht an eisenhaltigen- und Aluminiumeffektpigmenten, beträgt entsprechend vorzugsweise 95 bis 5 Gew.% bevorzugt 90 bis 10 Gew.%, weiter bevorzugt 85 bis 15 Gew.-%, besonders bevorzugt 80 bis 20 Gew.-% und ganz besonders bevorzugt 77 bis 25 Gew.%.

Die vorstehenden Gewichtsverhältnisse beziehen sich jeweils auf das Gesamtgewicht an eisenhaltigen Metalleffektpigmenten und Aluminiumeffektpigmenten. Etwaige weitere in der erfindungsgemäßen Metalleffektmischung enthaltenen zusätzlichen Komponenten, wie beispielsweise Rieselhilfsmittel, Farbpigmente, Buntpigmente, weitere Metalleffektpigmente, Perlglanzpigmente, Lack- oder Farbkomponenten sind nicht bei der Berechnung zu berücksichtigen.

Gemäß einer bevorzugten Variante besteht die erfindungsgemäße Mischung von Metalleffektpigmenten ausschließlich aus Aluminiumeffektpigmenten und eisenhaltigen Metalleffektpigmenten sowie vorzugsweise Lösungsmittel und optional Bindemittel.

Das Mischungsverhältnis von eisenhaltigen Metalleffektpigmenten und Aluminiumeffektpigmenten wird im Hinblick auf die gewünschten optischen Eigenschaften eingestellt. Sind Applikationen gefragt, die einen starken metallischen Glanz mit hoher Helligkeit, jedoch einen dunkleren Flop als bei Verwendung von reinen Aluminiumpigmente aufweisen, so wird der Anteil eisenhaltiger Metalleffektpigmente im Bereich von 5 bis 60 Gew.-%, bevorzugt von 10 bis 50 Gew.-% und besonders bevorzugt von 15 bis 40 Gew.-%, jeweils bezogen auf das Gesamtgewicht von eisenhaltigen Metalleffektpigmenten und Aluminiumeffektpigmenten, liegen.

Soll dagegen ein Farbton erreicht werden, der auch nahe des Glanzwinkels eher dunkel erscheint, so ist ein höherer Anteil an eisenhaltigen Metalleffektpigmenten bevorzugt. Hier liegen die bevorzugten Bereiche bei 50 bis 90 Gew.-%, weiter bevorzugt bei 60 bis 85 Gew.% und besonders bevorzugt bei 65 bis 80 Gew.-% eisenhaltige Metalleffektpigmente, jeweils bezogen auf das Gesamtgewicht von eisenhaltigen Metalleffektpigmenten und Aluminiumeffektpigmenten,.

Nachfolgend werden die Eigenschaften der in der erfindungsgemäßen Metalleffektpigmentmischung verwendeten eisenhaltigen Metalleffektpigmente und Aluminiumeffektpigmente, getrennt dargestellt.

**Eisenhaltige Metalleffektpigmente**

Die eisenhaltigen Metalleffektpigmente, vorzugsweise Eiseneffektpigmente, weisen bei einer über Dickenauszählung mit Rasterelektronenmikroskopie (REM) ermittelten Dickenverteilung in der Darstellung als Summenhäufigkeitsverteilung einen $h_{Fe,50}$-Wert aus einem Bereich von 10 bis 200 nm auf. Bevorzugt liegt der $h_{Fe,50}$-Wert in einem Bereich von 15 nm bis 150 nm, weiter bevorzugt von 15 nm bis 100 nm, noch weiter bevorzugt von 15 bis 55 nm. Als sehr geeignet hat sich ein $h_{Fe,50}$-Wert in einem Bereich von 20 bis 50 nm erwiesen.

Oberhalb einer mittleren Dicke $h_{Fe,50}$ von 200 nm weisen die eisenhaltigen Metalleffektpigmente kein besonders gutes spezifisches Deckvermögen (Deckvermögen pro Gewichtseinheit) und keinen hohen Glanz mehr auf. Da die erfindungsgemäßen Mischungen über einen ansprechenden Metallglanz verfügen sollen, sind dickere Eiseneffektpigmente nicht zu verwenden. Unterhalb von einem $h_{Fe,50}$-Wert von 10 nm sind die eisenhaltigen Metalleffektpigmente zu dunkel und mechanisch zu labil, um verwendet werden zu können.

Es können beispielsweise die in der EP 1 251 152 A1 beschriebenen Eiseneffektpigmente, die hiermit unter Bezugnahme aufgenommen ist, in der erfindungsgemäßen Metalleffektpigmentmischung verwendet werden.

Im Rahmen dieser Erfindung wird die mittlere Dicke der erfindungsgemäß zu verwendenden eisenhaltigen Effektpigmente, vorzugsweise Eiseneffektpigmente, mittels Rasterelektronenmikroskopie (REM) bestimmt. Bei dieser Methode werden so viele Teilchen vermessen, dass eine repräsentative statistische Auswertung vorgenommen werden kann. Üblicherweise werden etwa 100 Teilchen vermessen. Die Dickenverteilung wird dabei in Form einer Summenhäufigkeitskurve, die auch als Summenhäufigkeitsverteilung bezeichnet wird, dargestellt. Als "Mittelwert" bietet sich der $h_{50}$-Wert der Dickensummenhäufigkeitskurve an. Ein Maß für den Grobanteil ist der $h_{90}$-Wert. Der $h_{90}$-Wert beispielsweise besagt, dass 90 % aller Pigmentteilchen eine Dicke gleich diesem Wert oder unterhalb dieses Wertes besitzen. Entsprechend besagt beispielsweise ein $h_{98}$-Wert, dass 98 % aller Pigmentteilchen eine Dicke gleich diesem Wert oder unterhalb dieses Wertes besitzen. In analoger Weise ist der $h_{10}$-Wert ein Maß für den Feinanteil der Dickenverteilung, der besagt, dass 10 % aller Pigmentteilchen eine Dicke gleich diesem Wert oder unterhalb dieses Wertes besitzen.

Diese Werte können rechnerisch aus einer Liste der gemessenen Einzelwerte ermittelt werden, so z.B. mit Hilfe der "Quantil"-Funktion in einer Excel-Darstellung. Die Ermittlung der Dicken der einzelnen Metalleffektpigmente mittels REM erfolgt nach der in der DE 103 15 775 A1 beschriebenen Methode, wobei die Dickensummenhäufigkeitskurve dort als Dickensummendurchgangskurve bezeichnet wird.

Dabei kann bei einer erfindungsgemäßen Mischung aus eisenhaltigen Metalleffektpigmenten, bevorzugt Eiseneffektpigmenten, und Aluminiumeffektpigmenten die Dickenverteilung der Mischung insgesamt oder auch selektiv die Dickenverteilung der eisenhaltigen Metalleffektpigmente oder der Aluminiumeffektpigmente bestimmt werden. Die selektive Bestimmung kann vorgenommen werden, da sich die chemische Identität der Metalleffektpigmente in der Mischung anhand der Messung der rückgestreuten Elektronen mit Hilfe eines eingebauten BSE-Detektors (Back Scattering Electrons) bestimmen lässt. Die Energie der rückgestreuten Elektronen ist charakteristisch für jedes chemische Element.

Alternativ kann die chemische Identität der Metallpigmente im REM in aus der Mischung heraus auch durch EDAX mit fokussierten Elektronenstrahlen bestimmt werden.

Bei bevorzugten Ausführungsformen werden sehr dünne eisenhaltige Metalleffektpigmente, bevorzugt Eiseneffektpigmente, verwendet. Dabei soll nicht nur die mittlere Dicke ($h_{Fe,50}$-Wert) gering sein, sondern vorzugsweise auch die dickeren Pigmente der Dickenverteilung. Mithin ist bevorzugt, dass die eisenhaltigen Metalleffektpigmente bei einer über Dickenauszählung mit Rasterelektronenmikroskopie (REM) ermittelten Dickenverteilung in der Darstellung als Summenhäufigkeitsverteilung einen $h_{Fe,90}$-Wert aus einem Bereich von 20 bis 250 nm, bevorzugt von 20 bis 200, weiter bevorzugt von 20 bis 120 nm, noch weiter bevorzugt von 20 bis 80 nm, noch weiter bevorzugt von 22 bis 70 nm und noch weiter bevorzugt von 25 bis 60 nm aufweisen.

Insbesondere mit Eiseneffektpigmenten, die einen $h_{Fe,90}$-Wert aus einem Bereich von 20 nm bis 80 nm aufweisen, lassen sich sehr attraktive Folienkonterapplikationen, vorzugsweise im Tiefdruck oder Siebdruck, erstellen. Derartige Folienkonterapplikationen weisen, von der Folienseite aus betrachtet, einen hochglänzenden metallischen Spiegeleffekt auf, wie er sonst mit Metalleffektpigmenten nicht zugänglich ist.

Selbstverständlich werden bei Folienkonterapplikationen auch sehr dünne Aluminiumeffektpigmente eingesetzt.

Als dünne eisenhaltige Metalleffektpigmente werden bei einer besonders bevorzugten Ausführungsform Eiseneffektpigmente verwendet, da sich diese aus Eisengrieß durch Vermahlung mit einer sehr geringen Dicke sehr gut herstellen lassen. Stahlpigmente lassen sich aufgrund der viel geringeren Duktilität des Stahls im Vergleich zu Eisen nicht so gut vermahlen, weshalb die Herstellung sehr dünner Stahleffektpigmente, verglichen mit der Herstellung von Eiseneffektpigmenten, aufwendiger ist.

Vorzugsweise kommen keine dickeren Pigmente oberhalb von ca. 100 nm vor. Daher ist bevorzugt der $h_{Fe,98}$-Wert der Eiseneffektpigmente kleiner als 100 nm, weiter bevorzugt kleiner als 90 nm, besonders bevorzugt kleiner als 80 nm und ganz besonders bevorzugt kleiner als 70 nm.

Bei einer weiteren bevorzugten Ausführungsform weisen die eisenhaltigen Metalleffektpigmente, vorzugsweise Eiseneffektpigmente, der erfindungsgemäßen Metalleffektpigmentmischung eine mittlere Dicke $h_{Fe,50}$ aus einem Bereich von 15 bis 45 nm und einen $h_{Fe,90}$-Wert aus einem Bereich von 25 bis 60 nm auf. Bei einer weiteren besonders bevorzugten Ausführungsform der erfindungsgemäßen Metalleffektpigmentmischung weisen die eisenhaltigen Metalleffektpigmente, vorzugsweise Eiseneffektpigmente, eine mittlere Dicke $h_{Fe,50}$ aus einem Bereich von 20 bis 40 nm und einen $h_{Fe,90}$-Wert aus einem Bereich von 30 bis 50 nm auf.

Bei weiter bevorzugten Ausführungsformen weisen die eisenhaltigen Metalleffektpigmente, vorzugsweise Eiseneffektpigmente, der erfindungsgemäßen Metalleffektpigmentmischung einen $h_{Fe,10}$-Wert der Dickenverteilung aus einem Bereich von 8 bis 40 nm, weiter bevorzugt von 10 bis 35 nm und besonders bevorzugt aus einem Bereich von 15 bis 33 nm auf. Unterhalb eines $h_{Fe,10}$-Wertes von 8 nm sind die Eiseneffektpigmente auch meist zu klein in Bezug auf die Größenverteilung (Feinanteil), was zu einem starken Streulichtanteil und damit zu verschlechterten optischen Eigenschaften führen kann. Oberhalb eines $h_{Fe,10}$-Wertes von 40 nm sind die Pigmente meistens zu dick, da in diesem Fall auch der $h_{Fe,50}$- und der $h_{Fe,90}$-Wert zu groß sind und die bevorzugte Kombination aus hohem Glanz und Dunkelheit bei den eisenhaltigen Metalleffektpigmenten, vorzugsweise Eiseneffektpigmenten, häufig nicht mehr erhalten werden kann.

Die vorzugsweise in der erfindungsgemäßen Metalleffektpigmentmischung verwendeten Eiseneffektpigmente werden vorzugsweise durch eine äußerst schonende Verformungsmahlung von sehr feinem Eisengrieß, der eine sehr enge Korngrößenverteilung aufweist, hergestellt.

Das Verfahren zur Herstellung von bevorzugten dünnen, plättchenförmigen Eisenpigmenten umfasst das Vermahlen eines Eisengrießes mit einer bevorzugten Komgrößenverteilung mit einem $d_{Fe,Grieß,10} \leq 2{,}0\ \mu m$, einem $d_{Fe,Grieß,50} \leq 5{,}0\ \mu m$ und einem $d_{Fe,Grieß,90} \leq 7{,}0\ \mu m$ unter Verwendung eines Mahlwerks in Gegenwart von Lösemittel und Schmierstoffen und kugelförmigen Mahlkörpem.

Die Größenverteilung des Eisengrießes weist vorzugsweise einen $d_{Grieß,Fe,10} \leq 1{,}8\ \mu m$, einen $d_{Grieß,Fe,50} \leq 4{,}2\ \mu m$ und einen $d_{Grieß,Fe,90} \leq 6{,}0$ [m1]$\mu m$ auf. Bevorzugt umfasst die Größenverteilung einen $d_{Fe,Grieß,10} \leq 1{,}6\ \mu m$, einen $d_{Fe,Grieß,50} \leq 3{,}3\ \mu m$ und einen $d_{Fe,Grieß,90} \leq 5.5\ \mu m$.

Der Span der Größenverteilung des Eisengrießes, berechnet nach der Formel

$$\Delta d_{Grieß,Fe} = (d_{Grieß,Fe,90} - d_{Grieß,Fe,10})/\ d_{Grieß,Fe,50},$$

beträgt bevorzugt 0,7 bis 1,6, besonders bevorzugt 0,8 bis 1,5 und ganz besonders bevorzugt 0,9 bis 1,4.

Als Untergrenze weist die Größenverteilung vorzugsweise folgende Kenndaten auf: $d_{Grieß,Fe,10} \geq 0{,}5\ \mu m$, $d_{Grieß,Fe,50} \geq 0{,}8\ \mu m$ und $d_{Grieß,Fe,90} \geq 1{,}5\ \mu m$. Besonders bevorzugte Untergrenzen des eingesetzten Eisengriesses sind: $d_{Grieß,Fe,10} \geq 0{,}7\ \mu m$, $d_{Grieß,Fe,50} \geq 1{,}5\ \mu m$ und $d_{Grieß,Fe,90} \geq 2{,}5\ \mu m$.

Der verwendete Eisengrieß ist mithin überwiegend kein Eisengrieß in nanometrischen Dimensionen.

Die Verwendung eines derartig feinen und relativ eng geschnittenen Eisengrießes mit enger Größenverteilung ist äußerst vorteilhaft bei der Herstellung der erfindungsgemäß bevorzugt zu verwendenden Eiseneffektpigmente.

Während der Verformungsmahlung werden die Eisengrießpartikel nicht völlig gleichmäßig verformt: dies bedeutet, dass einige Partikel stärker verformt werden, während ein Teil der Grießpartikel erst sehr spät während der Vermahlung verformt wird. Ein Grund hierfür ist auch die Tatsache, dass die Verformungswahrscheinlichkeit eines Partikels von seiner Größe abhängig ist. So besitzen bereits zu Plättchen vorverformte Partikel eine höhere spezifische Fläche als noch unverformter Grieß und demgemäß eine höhere Wahrscheinlichkeit, weiter verformt zu werden. Die Breite der Größenverteilung des Grießes geht somit nicht nur in die Größenverteilung der daraus geformten Eisenplättchen ein, sondern auch in die Verteilung der Dickenverteilung. Für schmale Dickenverteilungen muss daher ein Eisengrieß mit entsprechend geringer Größenvarianz verwendet werden.

Die Eisenpartikel eines handelsüblichen Eisenpulvers werden mit herkömmlichen Mahlhilfsmitteln, beispielsweise mit einem Lösungsmittel wie Testbenzin und mit einem Schmiermittel, wie beispielsweise Ölsäure, mittels kugelförmiger Mahlkörper, durch eine äußerst schonende Verformungsmahlung zu dünnen Eisenplättchen vermahlen.

Unter Verformungsmahlung ist hier eine schonende Mahlung, bei der der Grieß weitgehend nur verformt wird, zu verstehen. Der Grieß bzw. die entstehenden Plättchen werden mithin nur immer weiter verformt und weitgehend nicht zerkleinert.

Die Mahlkörper sind vorzugsweise Mahlkugeln und bestehen bevorzugt aus Stahl, Glas oder Keramik. Besonders bevorzugt bestehen die Mahlkugeln aus Stahl.

Die Mahlkugeln weisen bevorzugt eine mittlere Größe von 0,5 bis 1,5 mm und besonders bevorzugt von 0,6 bis zu 1,0 mm auf.

Bevorzugt wird hierbei als Eisengrieß Carbonyleisenpulver und besonders bevorzugt reduzierend behandeltes Carbonyleisenpulver verwendet. Die Herstellung und chemische Zusammensetzung dieses Grießes ist in der DE 101 14 446 A1 ausführlich beschrieben, deren Inhalt hiermit unter Bezugnahme aufgenommen wird.

Weiterhin kann Eisengrieß, der durch elektrolytische Methoden oder durch Naßfällungsmethoden hergestellt wird oder durch eine Kombination dieser Methoden, verwendet werden. Im Prinzip sind Eisengrieße, die beispielsweise nach den Methoden, die in Hollemann, Wiberg "Lehrbuch der Anorganischen Chemie", Walter de Gruyter & Co Verlag Berlin, 91-100. Auflage (1985) S. 1.127 Kap. 1.1.2 dargestellt sind, als Ausgangsmaterial bei der Herstellung der erfindungsgemäß zu verwendenden Eiseneffektpigmente verwendbar.

Ein wesentlicher Unterschied zu dem Verfahren gemäß der Lehre der DE 101 14 446 A1 liegt darin, dass das, vorzugsweise reduzierend behandelte, Carbonyleisenpulver vorliegend eine enge Größenverteilung aufweisen muss, wie vorstehend ausgeführt. Somit ist zu verwendendes, vorzugsweise reduzierend behandeltes, Carbonyleisenpulver oder jeder andere Eisengrieß ggf. zunächst zu klassieren, um vorgenannte Größenverteilung einzustellen. Das Klassieren des Eisengrieß oder von Carbonyleisenpulver kann beispielsweise durch Siebung oder unter Verwendung eines Zyklons erfolgen.

Die Vermahlung der Grießpartikel aus Eisen zu Flakes (Eisenplättchen bzw. Eiseneffektpigmente) kann trocken oder nass, d. h. in Gegenwart von Lösemitteln wie Testbenzin, Mineralöl, Toluol, Alkoholen, Chlorwasserstoffen, Wasser oder deren Gemischen, erfolgen.

Bevorzugt werden die Grießpartikeln aus Eisen nass vermahlen, da die Nassvermahlung bzw. -verformung schonender ist als die Trockenvermahlung bzw. - verformung und bei der Nassvermahlung das eingesetzte Schmiermittel und ggf. die Inhibitorsubstanzen oder Korrosionsschutzmittel auf dem gesamten Mahlgut gleichmäßig verteilt werden. Auch aus sicherheitstechnischen Überlegungen ist die Naßvermahlung bzw. -verformung zu bevorzugen. Fein verteiltes Eisenpulver hat pyrophore Eigenschaften und ist daher besser in einer nicht-pulverförmigen Art zu handhaben, um eine unerwünschte Entzündung oder Explosion zu vermeiden.

Bei der Naßvermahlung bzw. -verformung kann das Mahlgut ferner nach jeder Mahlstufe einfacher klassiert werden.

Die Vermahlung von handelsüblichem Eisenpulver erfolgt vorzugsweise in herkömmlichen Mühlen, beispielsweise in Rührwerkskugelmühlen, Kollermühlen und Trommelkugelmühlen, besonders vorteilhaft in Drehrohrkugelmühlen.

Bei der Vermahlung wird Eisenpulver mit definierter Teilchengröße zusammen mit Lösemittel, z. B. Testbenzin, in eine Kugelmühle eingetragen. Zur Vermeidung des Kaltverschweißens der Pulverpartikel wird Schmiermittel, beispielsweise Ölsäure, Stearinsäure oder auch Inhibitoren, in einer Menge zugesetzt, welche von der jeweiligen freien spezifischen Oberfläche (BET) der ausgewalzten Eisenpigmente abhängig ist. In der Regel werden 2 bis 25 Gew.-% Ölsäure und/oder Stearinsäure und bevorzugt 2,5 bis 22 Gew.%, bezogen auf das Gewicht des Eisenpulvers, eingesetzt.

Beim Einsatz von Carbonyleisenpulver erfolgt dessen Reduktion vorzugsweise durch Tempern, in üblicher, beispielsweise in DE 101 14 446 A1 ausführlich beschriebener Weise, deren Inhalt hiermit unter Bezugnahme aufgenommen wird.

Es kann jedoch auch ein Eisengrieß, der in "Atomizem" (Zerstäubern) durch Verdüsung von flüssigem Eisen hergestellt wird, verwendet werden. Der Grieß hat bevorzugt eine weitgehend runde Form. Besonders bevorzugt werden Eisengrieße mit einer kugelförmigen bis leicht ellipsoiden Form verwendet.

Der erfindungsgemäß zu verwendende Eisengrieß ist ein sehr feiner Metallgrieß mit einer sehr engen Größenverteilung. Das Komband der Größenverteilung wird in üblicher Weise durch Lasergranulometrie ermittelt.

Der Grieß kann nach dem Verdüsungsschritt durch entsprechende Klassierungsschritte auf die gewünschte schmale Größenverteilung gebracht werden. Die Klassierung kann mit Windsichtern, Zyklonen, Sieben und/oder anderen bekannten Einrichtungen durchgeführt werden.

Um geringe Oxidgehalte im Eisengrieß zu realisieren, wird der Verdüsungsschritt bevorzugt unter Inertgasatmosphäre durchgeführt. Als Inertgase werden vorzugsweise Stickstoff und/oder Helium eingesetzt.

Die Reinheit des bei der Verdüsung verwendeten Eisens beträgt vorzugsweise 97,0 bis über 99,9 Gew.-%, und besonders bevorzugt 98,0 bis 99,9 Gew.%, bezogen auf das Gesamtgewicht des Eisengrießes. Der Grieß kann in entsprechend geringen Mengen die üblichen Legierungsbestandteile (z.B. Mg, Si, Cr, Mn etc.) enthalten.

Der Eisengrieß wird unter Verwendung eines Mahlwerks, vorzugsweise einer Kugelmühle oder einer Rührwerkskugelmühle, in Gegenwart von Lösemittel und Schmierstoffen als Mahlhilfsmittel und von kugelförmigen Mahlkörpern, vorzugsweise Mahlkugeln, durchgeführt.

Die Vermahlung kann in einem Arbeitsgang durchgeführt werden oder auch in zwei mehreren Arbeitsgängen. So können beispielsweise bei zwei Vermahlungsstufen jeweils Mahlkugeln unterschiedlicher Größe eingesetzt werden.

Aufgrund der schonenden Mahlweise dauert die Mahlung vergleichsweise lang. Die Mahldauer beträgt bevorzugt über 12 bis 100 h, besonders bevorzugt 15 bis 80 h und ganz besonders bevorzugt 18 bis 45 h. Wird die Vermahlung in zwei oder mehr Stufen durchgeführt, so verstehen sich diese Vermahlungszeiten als die Gesamtzeit der Vennahlungsdauer.

Bei Vermahlungsdauem von 12 h und weniger können die Pigmente nicht genügend weit verformt werden, um die erfindungsgemäßen geringen Dicken bei den eisenhaltigen Metalleffektpigmenten, vorzugsweise Eiseneffektpigmente, zu erhalten. Will man in kürzeren Mahldauern die erfindungsgemäßen Eiseneffektpigmente erhalten, so muss man die Partikel stärker verformen, beispielsweise durch höhere Umdrehungsgeschwindigkeiten. Bei höheren Umdrehungsgeschwindigkeiten erfolgt in einem starken Ausmaß eine Zerkleinerung und mithin nicht die gewünschte Verformung, wodurch eisenhaltige Metalleffektpigmente oder Eiseneffektpigmente mit minderer Qualität erhalten werden. Vermahlungsdauern über 100 h sind hingegen unwirtschaftlich.

Die langen Mahldauern führen zu einer Vielzahl von Grieß/Pigment-Kugel-Stößen. Dadurch wird das Pigment sehr gleichmäßig ausgeformt, wodurch eine sehr glatte Oberfläche und eine sehr enge Dickenverteilung ausgebildet wird.

Bevorzugt sind Kugeln mit sehr glatter Oberfläche, möglichst runder Form und einheitlicher Größe. Die Temperaturen während des Mahlvorganges liegen üblicherweise im Bereich von 10°C bis 70 °C. Bevorzugt sind Temperaturen in einem Bereich von 25°C bis 50°C.

Die Mahlung bzw. Verformung wird vorzugsweise in einem Lösemittel, vorzugsweise bei einem Gewichtsverhältnis von Lösemittel zu Eisenpartikel von 0,8 bis 6 und besonders bevorzugt von 1,0 bis 4,0, durchgeführt.

Das Gewichtsverhältnis der Mahlkugeln zu Eisenpartikeln von beträgt vorzugsweise 20 bis 120 besonders bevorzugt von 25 bis 100.

Bezogen auf die Vermahlung in einer Kugelmühle ist die kritische Drehzahl $n_{krit}$ ein wichtiger Parameter, der angibt, ab wann die Kugeln durch die Zentrifugalkräfte an die Mühlenwand gepresst werden und praktisch keine Mahlung mehr stattfindet:

$$n_{krit} = \sqrt{\frac{g}{2\pi^2} \cdot \frac{1}{D}}$$

wobei D der Trommeldurchmesser und g die Gravitationskonstante ist.

Die Umdrehungsgeschwindigkeiten der Kugelmühle betragen vorzugsweise 20 % bis 70 %, weiter vorzugsweise 25 % bis 65 % der kritischen Drehzahl $n_{krit}$.

Niedrige Umdrehungsgeschwindigkeiten begünstigen eine langsame Verformung der Eisenpartikel. Um eine langsame Verformung zu bewirken, werden bei dem erfindungsgemäßen Verfahren bevorzugt auch leichte Mahlkugeln verwendet. Bevorzugt werden Mahlkugeln mit einem Einzelgewicht von 0,2 bis 10 mg, besonders bevorzugt von 0,21 bis 5 mg und ganz besonders bevorzugt von 0,22 bis 4,3 mg verwendet.

Im Unterschied zu herkömmlichen Mahlverfahren wird der Eisengrieß bei der vorliegenden Herstellung zum überwiegenden Anteil nicht vermahlen bzw. zerkleinert, sondern äußerst schonend über einen längeren Zeitraum verformt.

Die oben angeführten Bedingungen führen zu einer sehr schonenden Mahlung bzw. Verformung, bei der der Eisengrieß langsam ausgeformt wird und Brüche infolge eines Kugelstoßes mit hoher kinetischer Energie vermieden werden.

Gemäß einer Variante der Erfindung weisen die verwendeten eisenhaltigen Metalleffektpigmente, vorzugsweise Eiseneffektpigmente, ein leafing-Verhalten auf, d.h. orientieren sich an oder in der Nähe der Oberfläche des Applikationsmediums, beispielsweise einer Farbe, Druckfarbe oder eines Lackes.

Gemäß einer Variante der Erfindung weisen die verwendeten eisenhaltigen Metalleffektpigmente, vorzugsweise Eiseneffektpigmente, ein non-leafing-Verhaften auf, d.h. orientieren sich in der Nähe der Substratoberfläche in dem Applikationsmediums, beispielsweise einer Farbe, Druckfarbe oder eines Lackes. Insbesondere bei Konterapplikationen ist es bevorzugt, dass die erfindungsgemäß zu verwendenden eisenhaltigen Metalleffektpigmente, vorzugsweise Eiseneffektpigmente, ein non-leafing-Verhalten zeigen.

Das leafing-Verhalten bzw. non-leafing Verhalten kann durch Oberflächenmodifizierung, beispielsweise durch Beschichtung mit Fettsäuren, gesteuert werden. Die Fettsäuren können dabei als Schmiermittel während der Vermahlung des Eisengrießes zugesetzt werden. Die Verwendung von Stearinsäure als Schmiermittel zu leafing-Pigmenten, Ölsäure hingegen zu non-leafing-Pigmenten.

**Aluminiumeffektpigmente**

Als Aluminiumeffektpigment kann im Prinzip jedes Aluminiumeffektpigment verwendet werden. Um einen optisch hochwertigen Effekt, insbesondere jedoch einen hohen Glanz zu erzielen, ist es erfindungsgemäß bevorzugt, ebenfalls sehr dünne Aluminiumeffektpigmente einzusetzen.

So können in der erfindungsgemäßem Metalleffektpigmentmischung beispielsweise Aluminiumeffektpigmente, die durch PVD-Verfahren hergestellt werden, oder Aluminiumeffektpigmente, die in der WO 2004/087816 A2, die hiermit unter Bezugnahme mit aufgenommen ist, offenbart sind, eingesetzt werden.

Erfindungsgemäß sind Aluminiumeffektpigmente bevorzugt, die bei einer über Dickenauszählung mit Rasterelektronenmikroskopie (REM) ermittelten Dickenverteilung in der Darstellung als Summenhäufigkeitsverteilung einen $h_{Al,50}$-Wert aus dem Bereich von 15 bis 150 nm aufweisen.

Weiter bevorzugt weisen die Aluminiumeffektpigmente einen $h_{Al,50}$-Wert aus dem Bereich von 15 bis 100 nm, noch weiter bevorzugt von 15 bis 80 nm, besonders bevorzugt von 16 bis 60 nm und weiterhin bevorzugt von 17 bis 55 nm auf.

Insbesondere bei Folienkonterapplikationen weisen die Aluminiumeffektpigmente bevorzugt einen $h_{Al,50}$-Wert von 20 bis 80 nm, besonders bevorzugt von 20 bis 60 nm und ganz besonders bevorzugt von 20 bis 50 nm auf.

Als sehr geeignet haben sich Aluminiumeffektpigmente erwiesen, die bei einer über Dickenauszählung mit Rasterelektronenmikroskopie (REM) ermittelten Dickenverteilung, in der Darstellung als Summenhäufigkeitsverteilung einen $h_{Al,50}$-Wert aus dem Bereich von 30 bis unter 100 nm aufweisen.

Da bei Folienkonterapplikationen vorzugsweise sämtliche Metalleffektpigmente eine geringe Dicke aufweisen, weisen die Aluminiumeffektpigmente bevorzugt auch einen $h_{Al,90}$-Wert von 25 bis 80 nm auf.

Weiterhin ist bevorzugt, dass die Aluminiumeffektpigmente einen Dickenspan, der nach der Formel

$$\Delta h_{Al} = 100 \times (h_{Al,90} - h_{Al,10})/h_{Al,50}$$

berechnet wird, von 25 bis unter 70 %, weiter bevorzugt von 30 % bis 67 %, noch weiter bevorzugt von 40 % bis 65 % und besonders bevorzugt von 40 % bis 60 % aufweisen.

Bei diesen dünnen Aluminiumeffektpigmenten mit sehr enger Dickenverteilung können auch die bekannten, durch PVD-Verfahren hergestellten Aluminiumeffektpigmente verwendet werden. Es können und werden auch durch Nassvermahlung hergestellte Aluminiumeffektpigmente in der erfindungsgemäßen Metalleffektpigmentmischung verwendet. Dabei werden jedoch aufgrund des weniger aufwändigen Herstellungsverfahrens und den damit verbundenen geringeren Herstellungskosten die durch Vermahlung hergestellten Aluminiumeffektpigmente bevorzugt verwendet.

Aluminiumeffektpigmente, die durch Nassvermahlung hergestellt sind und einen $h_{50}$ von 15 bis 80 nm mit einem einen Dickenspan von unter 70 % aufweisen, waren bislang noch nicht zugänglich.

Ähnlich wie bei den erfindungsgemäß bevorzugten Eiseneffektpigmenten beruht die Herstellung dieser Aluminiumeffektpigmente auf der Verwendung von feinem Aluminiumgrieß mit enger Korngrößenverteilung.

Das Verfahren zur Herstellung der erfindungsgemäß zu verwendenden Aluminiumeffektpigmente zeichnet sich durch eine äußerst schonende Verformungsmahlung von Aluminiumgrieß aus. Im Einzelnen umfasst das Verfahren folgende Schritte:

a) Bereitstellen eines Aluminiumgrießes mit einer Korngrößenverteilung, welche vorzugsweise einen $d_{Grieß,Al,10} < 3,0$ $\mu$m, einen $d_{Grieß,Al,50} < 5,0$ $\mu$m und einen $d_{Grieß,Al,90} < 8,0$ $\mu$m aufweist,

b) Vermahlen des Aluminiumgrießes aus Schritt a) unter Verwendung eines Mahlwerks in Gegenwart von Lösemittel und Schmierstoffen und Mahlkörpern, die vorzugsweise ein Einzelgewicht von 2 bis 13 mg aufweisen.

Der Aluminiumgrieß wird bevorzugt in "Atomizern" durch Verdüsung bzw. Zerstäubung von flüssigem Aluminium, vorzugsweise einer Aluminiumschmelze, hergestellt. Der Grieß umfasst oder besteht aus Aluminiumpartikeln mit einer vorzugsweise weitgehend runden Form. Besonders bevorzugt werden Aluminiumgrieße mit Aluminiumpartikeln in einer kugelförmigen bis leicht ellipsoiden Form verwendet. Der nach Verdüsung einer Aluminiumschmelze erhaltene Aluminiumgrieß wird gemäß einer bevorzugten Variante klassiert, um die gewünschte Korngrößenverteilung, die auch als Komband bezeichnet werden kann, zu erhalten.

Der Aluminiumgrieß ist vorzugsweise ein sehr feiner Metallgrieß mit einer sehr engen Größenverteilung. Das Kornband der Größenverteilung wird in üblicher Weise durch Laserbeugungsspektrometrie ermittelt, wobei aus der Laserlichtbeugung die Partikelgröße ermittelt werden kann. Die Laserbeugungsspektrometrie kann dabei beispielsweise mit dem Gerät Helos der Firma Sympatec GmbH, Clausthal-Zellerfeld, Deutschland, gemäß Herstellerangaben durchgeführt werden.

Die Größenverteilung weist vorzugsweise einen $d_{Grieß-Al,10} < 3,0$ $\mu$m, einen $d_{Grieß-Al,50} < 5,0$ $\mu$m und einen $d_{Grieß-Al,90} < 8,0$ $\mu$m auf. Bevorzugt umfasst die Größenverteilung einen $d_{Grieß-Al,10} < 0,6$ $\mu$m, einen $d_{Grieß-Al,50} < 2,0$ $\mu$m und einen $d_{Grieß-Al,90} < 4,0$ $\mu$m.

Der Grieß kann nach dem Verdüsungsschritt durch entsprechende Klassierungsschritte auf die gewünschte schmale Größenverteilung gebracht werden. Die Klassierung kann mit Windsichtern, Zyklonen und anderen bekannten Einrichtungen durchgeführt werden.

Diese feinen und relativ eng geschnittenen Aluminiumgrieße sind besonders gut geeignet, um die erfindungsgemäß zu verwendenden Aluminiumeffektpigmente herzustellen. Als Untergrenze weist die Größenverteilung vorzugsweise folgende Kenndaten auf: $d_{Grieß,Al,10} > 0,15$ $\mu$m, $d_{Grieß,Al,50} > 0,8$ $\mu$m und $d_{Grieß,Al,90} > 2,0$ $\mu$m. Der verwendete Aluminiumgrieß ist mithin überwiegend kein Aluminiumgrieß in nanometrischen Dimensionen.

Weiter bevorzugt sind Aluminiumgrieße mit einem $d_{Grieß,Al,50}$-Wertebereich von 0,9 bis 3,0 $\mu$m und noch weiter bevorzugt von 0,95 bis 2,5 $\mu$m.

Diese bevorzugt verwendeten Aluminiumgrieße weisen bevorzugt einen Span ihrer Größenverteilung, der in üblicher Weise als

$$\Delta d_{Grieß,Al} = (d_{Grieß,Al,90} - d_{Grieß,Al,10})/ d_{Grieß,Al,50}$$

definiert ist, von 30 % bis 200 % und weiter bevorzugt von 40 % bis 180 % und ganz besonders bevorzugt von 50 % bis 170 % auf.

Die Verwendung eines derartig feinen Aluminiumgrießes mit enger Größenverteilung ist äußerst vorteilhaft bei der Herstellung der erfindungsgemäß zu verwendenden Aluminiumeffektpigmente. Während der Verformungsmahlung werden die Aluminiumgrießpartikel nicht völlig gleichmäßig verformt: dies bedeutet, dass einige Partikel stärker verformt werden, während ein Teil der Grießpartikel erst sehr spät während der Vermahlung verformt werden. Ein Grund hierfür ist auch die Tatsache, dass die Verformungswahrscheinlichkeit eines Partikels von seiner Größe abhängt. So besitzen bereits zu Plättchen vorverformte Partikel eine höhere spezifische Fläche als noch unverformter Grieß und demgemäß eine höhere Wahrscheinlichkeit, weiter verformt zu werden. Die Breite der Größenverteilung des Grießes geht somit nicht nur in die Größenverteilung der daraus geformte Aluminiumplättchen ein, sondern auch in die Verteilung der Dickenverteilung. Für schmale Dickenverteilungen muss daher ein Aluminiumgrieß mit entsprechend geringer Größenvarianz verwendet werden.

Die Reinheit des bei der Verdüsung verwendeten Aluminiums beträgt vorzugsweise 99,0 bis über 99,9 Gew.-%. Der Grieß kann in entsprechend geringen Mengen die üblichen Legierungsbestandteile, wie z.B. Mg, Si, Fe, enthalten.

Der Aluminiumgrieß wird unter Verwendung eines Mahlwerks, vorzugsweise einer Kugelmühle oder einer Rührwerkskugelmühle, in Gegenwart von Lösemittel und Schmierstoffen als Mahlhilfsmittel und von Mahlkörpern, die ein Einzelgewicht von 1,2 bis 13 mg aufweisen, vermahlen. Aufgrund der äußerst schonenden Mahlweise dauert diese Mahlung vergleichsweise lang. Die Mahldauer beträgt bevorzugt 15 bis 100 h, bevorzugt 16 bis 80 h und besonders bevorzugt 17 bis 70 h.

Gemäß einer bevorzugten Weiterbildung der Erfindung weisen die Mahlkörper ein Einzelgewicht von 2,0 bis 12,5 mg und besonders bevorzugt von 5,0 bis 12,0 mg auf. Als Mahlkörper werden vorzugsweise sphärische Körper, weiter bevorzugt Kugeln verwendet.

Bevorzugt sind Kugeln mit sehr glatter Oberfläche, möglichst runder Form und weitgehend einheitlicher Größe. Das Kugelmaterial kann aus Stahl, Glas oder Keramik, wie z.B. Zirkoniumoxid oder Korund sein. Die Temperaturen während des Mahlvorganges liegen vorzugsweise im Bereich von 10°C bis 70 °C. Bevorzugt sind Temperaturen in einem Bereich von 25°C bis 45 °C.

Besonders bevorzugt sind Kugeln aus Glas und einem mittleren Einzelgewicht von 2,0 bis 12,5 mg.

Weiterhin sind bevorzugt sind Kugeln aus Stahl und einem mittleren Einzelgewicht von 1,2 bis 4,5 mg und besonders bevorzugt einem mittleren Einzelgewicht von 1,4 bis 4,0 mg sowie weiterhin besonders bevorzugt einem mittleren Einzelgewicht von 2,0 bis 3,5 mg.

Die langen Mahldauern führen zu einer Vielzahl von Pigment-Kugel-Stößen. Dadurch wird das Pigment sehr gleichmäßig ausgeformt, wodurch eine sehr glatte Oberfläche und eine sehr enge Dickenverteilung ausgebildet wird.

Die Umdrehungsgeschwindigkeiten der Kugelmühle betragen vorzugsweise 25% bis 68%, weiter vorzugsweise 28 % bis 60 % und besonders bevorzugt 30 % bis unter 50 % und weiterhin besonders bevorzugt 35 % bis 45 % der kritischen Drehzahl $n_{krit}$.

Niedrige Umdrehungsgeschwindigkeiten begünstigen eine langsame Verformung des Aluminiumgrießes. Um eine langsame Verformung zu bewirken, werden bei dem erfindungsgemäßen Verfahren bevorzugt auch leichte Mahlkugeln verwendet. Mahlkugeln mit einem Einzelgewicht über 13 mg können den Aluminiumgrieß zu stark verformen, was zu vorzeitigem Bruch führen kann.

Im Unterschied zu herkömmlichen Mahlverfahren wird der Aluminiumgrieß bei dem erfindungsgemäßen Verfahren zum überwiegenden Anteil nicht vermahlen bzw. zerkleinert, sondern äußerst schonend über einen längeren Zeitraum verformt.

Die Vermahlung mit sehr leichten Kugeln in Verbindung mit geringen Drehzahlen und einer langen Mahldauer führt zu einer äußerst schonenden Vermahlung, bei der sehr dünne Aluminiumpigmente erhalten werden. Da der eingesetzte Aluminiumgrieß eine sehr enge Korngrößenverteilung aufweist, weisen auch die erfindungsgemäßen Aluminiumeffektpigmente eine sehr einheitliche Dickenverteilung auf.

Die Mahlung kann in einem Lösemittel bei einem Gewichtsverhältnis von Lösemittel zu Aluminiumgrieß von 2,5 bis 10 und bei einem Gewichtsverhältnis der Mahlkugeln zu Aluminiumgrieß von 20 - 110 und mit Schmierstoffen als Mahlhilfsmittel stattfinden.

Als Schmierstoffe können während der Vermahlung eine Vielzahl von Verbindungen verwendet werden.

Hierbei sind die schon seit langer Zeit verwendeten Fettsäuren mit Alkylresten von 10 bis 24 C-Atomen zu nennen. Vorzugsweise werden Stearinsäure, Ölsäure oder Mischungen derselben verwendet.

Dabei führt Stearinsäure als Schmiermittel zu leafing-Pigmenten, Ölsäure hingegen zu non-leafing-Pigmenten. Leafing-Pigmente sind dadurch gekennzeichnet, dass sie in einem Anwendungsmedium, beispielsweise einem Lack oder einer Druckfarbe aufschwimmen, d.h. sich an der Oberfläche des Anwendungsmediums anordnen. Non-leafing-Pigmente ordnen sich hingegen im Anwendungsmedium an. Den Fettsäuren können zusätzlich beispielsweise langkettige Aminoverbindungen zugesetzt werden. Die Fettsäuren können tierischen oder auch pflanzlichen Ursprungs sein. Ebenfalls können organische Phosphonsäuren und/oder Phosphorsäureester als Schmiermittel verwendet werden.

Gemäß einer Variante der Erfindung weisen die verwendeten Aluminiumeffektpigmente ein leafing-Verhalten auf, d.h. orientieren sich an oder in der Nähe der Oberfläche des Applikationsmediums, beispielsweise einer Farbe, Druckfarbe oder eines Lackes.

Gemäß einer Variante der Erfindung weisen die verwendeten Aluminiumeffektpigmente ein non-leafing-Verhalten auf, d.h. orientieren sich in der Nähe der Substratoberfläche in dem Applikationsmediums, beispielsweise einer Farbe, Druckfarbe oder eines Lackes. Insbesondere bei Konterapplikationen ist es bevorzugt, dass die erfindungsgemäß zu verwendenden Aluminiumeffektpigmente ein non-leafing-Verhalten zeigen.

## Metalleffektpigmentmischung

Bei einer bevorzugten Ausführungsform weisen sowohl das Eiseneffektpigment wie auch dass Aluminiumeffektpigment der Metalleffektpigmentmischung sehr geringe Pigmentdicken auf.

Bei einer bevorzugten Ausführungsform weisen sämtliche Metalleffektpigmente der erfindungsgemäßen Metalleffektpigmentmischung insgesamt einen $h_{M,50}$-Wert von 15 bis 100 nm, bevorzugt von 20 bis 80 nm und besonders bevorzugt von 20 bis 60 nm auf. Diese Werte beziehen sich auf sämtliche Al- bzw. Fe-Pigment in der Mischung und sind auch unabhängig vom Mischungsverhältnis der beiden Komponenten.

Bei der erfindungsgemäßen Metalleffektpigmentmischung können die Aluminiumeffektpigmente und eisenhaltigen Effektpigmente, vorzugsweise Eiseneffektpigmente, ein voneinander verschiedenes leafing- bzw. non-leafing-Verhalten aufweisen. So können die Aluminiumeffektpigmente ein non-leafing und die eisenhaltigen Metalleffektpigmente, vorzugsweise Eiseneffektpigmente, ein leafing-Verhalten aufweisen oder umgekehrt. Selbstverständlich können die Aluminiumeffektpigmente und die eisenhaltigen Metalleffektpigmente, vorzugsweise Eiseneffektpigmente, beide ein leafing-Verhalten oder beide ein non-leafing-Verhalten aufweisen.

Es hat sich überraschenderweise gezeigt, dass die optischen Effekte der erfindungsgemäßen Metalleffektpigmentmischung, mit oder ohne Einwirkung eines Magnetfeldes, wie oben beschrieben, verstärkt werden können, bei Verwendung von Aluminiumeffektpigmenten und eisenhaltigen Effektpigmenten, vorzugsweise Eiseneffektpigmenten, wenn diese ein voneinander verschiedenes leafing- bzw.-non-leafing-Verhalten aufweisen.

Wenn die Aluminiumeffektpigmente ein leafing-Verhalten aufweisen, kommen Helligkeit und Glanz der Metalleffektmischung nach Applikation in einem Applikationsmedium stärker zur Geltung als im umgekehrten Fall.

Gemäß einer weiteren bevorzugten Ausführungsform umfasst die erfindungsgemäße Mischung ein Pigmentkonzentrat mit einem Gehalt an Metalleffektpigmenten von 30 bis 65 Gew.-% und einem Lösemittelgehalt von 35 bis 70 Gew.-%, jeweils bezogen auf das Gesamtgewicht des Pigmentkonzentrats.

Bei der Herstellung der erfindungsgemäßen Mischung von Metalleffektpigmenten können die Aluminiumeffektpigmente und die eisenhaltigen Metalleffektpigmente, vorzugsweise Eiseneffektpigmente, trocken oder in einem Lösemittel miteinander vermischt werden.

Die erfindungsgemäße Mischung von Metalleffektpigmenten kann in verschiedenen Darreichungsformen vorliegen, beispielsweise als Pulver, Granulat, Tabletten, Briketts, Würstchen, Pellets, Paste, etc..

Vorzugsweise liegt die erfindungsgemäße Mischung in staubarmer oder staubfreier Form vor. Der Lösemittelgehalt kann dabei in einem Bereich von bis zu 20 Gew.% liegen, bezogen auf das Gesamtgewicht der Mischung. Vorzugsweise liegt der Lösemittelgehalt in einem Bereich von 1 bis 10 Gew.-%, weiter bevorzugt von 3 bis 8 Gew.-%, jeweils bezogen auf das Gesamtgewicht der Mischung.

Die erfindungsgemäßen Formulierungen sind vorzugsweise, Lacke, Pulverlacke, Farben, Druckfarben und Kosmetika, vorzugsweise Nagellacke.

Bei den beschichteten Gegenständen handelt es sich vorzugsweise um Karosserien, Fassadenelemente, Fensterrahmen oder Finger- und Fußnägel.

Die folgenden Beispiele erläutern die Erfindung näher, ohne sie jedoch einzuschränken.

## Fe1; Vergleichsbeispiel 1

1. Schritt: 200 g Carbonyleisengrieß SQ (Fa. BASF AG) in 400 ml Testbenzin sowie 2,8 g Ölsäure wurden in eine Topfmühle (Länge: 32 cm, Durchmesser: 19 cm) gefüllt und die Mühle geschlossen. Anschließend wurde der Grieß 6 h lang mit 4 kg Chromstahlkugeln (Durchmesser: 1,5 mm) bei 25 U/min vermahlen. Das aus der Mühle entleerte Vermahlungsprodukt wird mit Testbenzin ausgewaschen und auf einen Lösemittelgehalt von 35 Gew.-% eingestellt.

2. Schritt: Der Filterkuchen aus dem 1. Schritt, enthaltend 100 g Eiseneffektpigmente und 150 ml Testbenzin sowie 0,9 g Ölsäure, wurden in eine weitere Topfmühle mit denselben Abmessungen gefüllt und die Mühle geschlossen. Anschließend wurde 24 h lang mit 3 kg Stahlkugeln (Durchmesser: 0,8 mm) mit 25 U/min vermahlen. Das aus der Mühle entleerte Vermahlungsprodukt wurde mit Testbenzin ausgewaschen und mittels einer Siebung (40 $\mu$m) von den Mahlkugeln getrennt. Der Siebdurchgang wurde mittels einer Nutsche weitgehend von Testbenzin befreit und anschließend mit Testbenzin in einem Labormischer angepastet (ca. 65 Gew.-% Feststoffanteil).

**Al 1; Vergleichsbeispiel 2:**

Kommerziell erhältliches Silvershine® S 2100 (Fa. Eckart).

Hergestellt in Anlehnung an die WO 2004/087816 A2.

**Al 2; Vergleichsbeispiel 3:**

Hier wurde ein Aluminiumeffektpigment mit einer sehr dünnen Dickenverteilung hergestellt:

a) Verdüsung:

In einem Induktionstiegelofen (Fa. Induga, Ofeninhalt ca. 2,5 to) wurden Aluminiumbarren kontinuierlich eingebracht und aufgeschmolzen. Im sogenannten Vorherd lag die Aluminiumschmelze bei einer Temperatur von etwa 720 °C flüssig vor. Mehrere Düsen tauchten in die Schmelze ein und verdüsten die Aluminiumschmelze vertikal nach oben. Das Verdüsungsgas wurde in Kompressoren (Fa. Kaeser) bis auf 20 bar verdichtet und in Gaserhitzern bis auf etwa 700 °C erhitzt. Der entstandene Aluminiumgrieß erstarrte und erkaltete im Fluge. Der Induktionsofen war in eine geschlossene Anlage integriert. Die Verdüsung erfolgte unter Inertgas (Stickstoff). Die Abscheidung des Aluminiumgrieß erfolgte zuerst in einem Zyklon, wobei der dort abgeschiedene pulverförmige Aluminiumgrieß einen $d_{50}$ von 14 -17 $\mu$m aufwies. Zur weiteren Abscheidung diente in Folge ein Multizyklon, wobei der in diesem abgeschiedene pulverförmige Aluminiumgrieß einen $d_{\text{Grieß,Al,50}}$ von 2,3 - 2,8 $\mu$m aufwies. Die Gas-Feststoff-Trennung erfolgte in einem Filter (Fa. Alpine) mit Metallelementen. Hierbei wurde als feinste Fraktion ein Aluminiumgrieß mit einem $d_{\text{Grieß,Al,10}}$ von 0,7 $\mu$m, einem $d_{\text{Grieß,Al,50}}$ von 1,9 $\mu$m und einem $d_{\text{Grieß,Al,90}}$ von 3,8 $\mu$m gewonnen.

b) Vermahlung:

In eine Topfmühle (Länge: 32 cm, Breite: 19 cm) wurden 4 kg Glaskugeln (Durchmesser: 2 mm), 75 g des feinsten Aluminiumgrießes aus vorstehendem Schritt a), 200 g Testbenzin und 3,75 g Ölsäure gegeben. Anschließend wurde 15 h lang bei 58 U/min vermahlen. Das Produkt wurde durch Spülen mit Testbenzin von den Mahlkugeln getrennt und anschließend in einer Nasssiebung auf einem 25 $\mu$m-Sieb durchgesiebt. Das Feinkorn wurde über einer Nutsche weitgehend von Testbenzin befreit und anschließend mit Testbenzin in einem Labormischer angepastet (ca. 50 Gew.-% Feststoffanteil).

**Al 3; Vergleichsbeispiel 4:**

Kommerziell erhältliches Metalure A 41010 BG (Vertrieb Fa. Eckart, Deutschland). PVD-Aluminiumeffektpigmentdispersion in Butylglykol mit einem Metallpigmentanteil von 10 Gew.-%.

**Al 4; Vergleichsbeispiel 5:**

Kommerziell erhältliches PVD-Aluminiumpigment Metalure® L 55700 (Vertrieb Fa. Eckart). PVD-Aluminiumeffektpigmentdispersion mit einem Metallpigmentanteil von 10 Gew.-%.

**Erfindungsgemäße Beispiele 1 a-e:**

Mischungen aus Fe 1 und Al 1 gemäß Tabelle 1.

**Erfindungsgemäße Beispiele 2 a-e:**

Mischungen aus Fe 1 und Al 2 gemäß Tabelle 1.

**Erfindungsgemäße Beispiele 3 a-e:**

Mischungen aus Fe 1 und Al 3 gemäß Tabelle 1.

**Erfindungsgemäße Beispiele 4 a-e:**

Mischungen aus Fe 1 und Al 4 gemäß Tabelle 1.

Tab.1: Kenngrößen der Teilchengrößenverteilung und der Dickenverteilung der Ausgangspigmente

| Probe | Metall | Größenverteilung | | | Dickenverteilung | | | Span Dicken | Formfaktor |
|---|---|---|---|---|---|---|---|---|---|
| | | $d_{10}$ [$\mu$m] | $d_{50}$ [$\mu$m] | $d_{90}$ [mm] | $h_{10}$ [nm] | $h_{50}$ [nm] | $h_{90}$ [nm] | | |
| Vergleichsbeispiel 1 | Fe 1 | 7,0 | 16,0 | 26,0 | 22 | 31 | 53 | 1,00 | 516 |
| Vergleichsbeispiel 2 | Al 1 | 11,3 | 20,1 | 32,4 | 46 | 74 | 145 | 1,34 | 272 |
| Vergleichsbeispiel 3 | Al 2 | 7,1 | 13,0 | 20,0 | 35 | 54 | 70,2 | 0,65 | 241 |
| Vergleichsbeispiel 4 | Al 3 | 4,3 | 10.0 | 18,0 | 24 | 27 | 31 | 0,26 | 370 |
| Vergleichsbeispiel 5 | Al 4 | 4,8 | 10,2 | 18,5 | 28 | 33 | 38 | 0,30 | 309 |
| Vergleichsbeispiel 6 | Fe 2 | 6,5 | 11,0 | 16,0 | 31 | 36 | 47 | 0,44 | 306 |

Die Pigmente der Vergleichsbeispiele sowie die erfindungsgemäßen Mischungen wurden in einen Lack auf Basis eines Nitrocellulosebindemittels eingearbeitet. Als Lösemittel wurde ein Gemisch aus Isopropylacetat, Isopropanol und Methoxypropanol verwendet und der Lackformulierung geringe Zusätze eines Fixiermittels zur Erniedrigung des Dampfdrucks (0,4 Gew.- %) zugesetzt.
Die Lacke wurden mittels einer 36 $\mu$m Rakel auf Kontrastkartons aufgezogen und anschließend bei 140 °C für 30 s eingebrannt.
Die Pigmentierungshöhe wurde so eingestellt, dass jeweils deckende Lackierungen erreicht wurden, die jedoch nicht überpigmentiert waren. Da die Dichte der Eisenpigmente deutlich höher als jene der Aluminiumpigmente ist, wurde dabei der Gesamtpigmentgehalt jeweils angepasst. So wurden bei höheren Eiseneffektpigmentgehalten die Pigmentierungshöhen an Metalleffektpigmenten insgesamt erhöht. Da auch die verwendeten Aluminiumeffektpigmente verschiedene Deckfähigkeiten aufwiese, wurde die Gesamtmenge hier ebenfalls angepasst. Stets wurden jedoch insgesamt 3,0 g Metalleffektpaste mit 17,0 g des Lackansatzes miteinander vermischt.
Die Rakelabzüge wurden durch eine Glanzmessung bei 60° in Anlehnung an die DIN 67 530 (Gerät: micro-TRI-gloss von Byk-Gardner, D-82538 Geretsried, Deutschland) charakterisiert. Kalibriert wurde hier mittels Dunkelkalibrierung sowie einer schwarzen Spiegelglasplatte mit Werten von 92 für 60°.
Weiterhin wurde die diffuse Helligkeit L $*_{diffus}$ bestimmt. Hierzu wurde ein kommerziell erhältliches Gerät CM-508i der Fa. Minolta (Lichtquelle: D65, 10° Normalbetrachter) in diffuser Messgeometrie bei einem Beobachtungswinkel von 8° verwendet.
Weiterhin wurden die angesetzten Lacke auf einen Karton abgerakelt, unter dem sich zwei Magnetfolien befanden. Dabei betrug der Abstand der beiden Magnetfolien ca. 3 cm. An den Ecken der Magnetfolien bilden sich naturgemäß die stärksten Magnetfeldlinien aus.
Hierbei wurde beobachtet, dass bei Verwendung von reinen Eisenpigmenten (Vergleichsbeispiel 1) sich an diesen Ecken erwartungsgemäß dunkle Streifen zeigten. Dies ist auf die Orientierung der Eiseneffektpigmente im Magnetfeld zurückzuführen und ist ein bekannter Effekt. Die Eiseneffektpigmente werden durch das Magnetfeld aus ihrer natürlichen planparallelen Orientierung abgelenkt und senkrecht oder nahezu senkrecht dazu orientiert. Damit sieht der Beobachter die Eiseneffektpigmente unter einem extrem flachen Winkel und somit erscheinen sie ihm weitgehend schwarz. In den Bereichen mit schwächerem Magnetfeld, bzw. einer geänderten Magnetfeldlinienstruktur sind die Eiseneffektpigmente weniger stark ausgerichtet bis hin zu gar keiner Ausrichtung in den Bereichen ohne Magnetfeld.
Bei den erfindungsgemäßen Mischungen hingegen beobachtet man überraschenderweise an den Stellen mit den stärksten Magnetfeldern helle Streifen. Bei manchen Mischungen sind diese hellen Streifen flankiert von dunkleren Bereichen.

Lacke mit reinen Aluminiumeffektpigmenten hingegen zeigten selbstverständlich keinerlei Effekte unter dem Einfluss des Magnetfeldes.

Dies ermöglicht dem Designer neue, überraschende Möglichkeiten der Effektgestaltung.

Tabelle 2: Mischungsverhältnisse und optische Eigenschaften der Lackrakelabzüge

| Proben | Eiseneffektpigment | Aluminiumeffektpigment | Anteil Eiseneffektpigment in Mischung [Gew.-%] | Anteil Aluminiumeffektpigment in Mischung [Gew.-%] | Anteil Metalleffektpigmente in der "Paste" in Gew.-% | Glanz 60° | L*diffus | Subjektiver Eindruck |
|---|---|---|---|---|---|---|---|---|
| Vergleichsbeispiel 2 | --- | Al1 | 0 | 100 | 50.0 | 150 | 91,4 | Hochglanzend, sehr hell, guter Flop |
| Beispiel 1a | Fe1 | Al1 | 10 | 90 | 52,0 | 159 | 90,3 | Hochglanzend, sehr hell, dunklerer Flop |
| Beispiel 1b | Fe1 | Al1 | 30 | 70 | 54,7 | 150 | 88,3 | Hochglanzend, sehr hell, dunkler Flop |
| Beispiel 1c | Fe1 | Al1 | 50 | 50 | 58,3 | 136 | 83.8 | Hochglanzend, hell, sehr dunkler Flop |
| Beispiel 1d | Fe1 | Al1 | 70 | 30 | 62,5 | 121 | 79,0 | Glänzend, mittelhell, sehr dunkler Flop |
| Beispiel 1e | Fe1 | Al1 | 90 | 10 | 67,4 | 92,2 | 71,6 | Glänzend, mittelhell, sehr starker dunkler Flop |
| Vergleichsbeispiel 1 | Fe 1 | --- | 100 | 0 | 70,0 | 81,8 | 67,0 | Glänzend, dunkel metallisch, sehr dunkler Flop |
| Vergleichsbeispiel 3 | --- | Al 2 | 0 | 100 | 30,0 | 130 | 90,1 | Glänzend, sehr hell, guter Flop |

(fortgesetzt)

| Proben | Eiseneffektpigment | Aluminiumeffektpigment | Anteil Eiseneffektpigment in Mischung [Gew.-%] | Anteil Aluminiumeffektpigment in Mischung [Gew.-%] | Anteil Metalleffektpigmente in der "Paste" in Gew.-% | Glanz 60° | $L^*_{diffus}$ | Subjektiver Eindruck |
|---|---|---|---|---|---|---|---|---|
| Beispiel 2a | Fe 1 | Al 2 | 10 | 90 | 31,8 | 138 | 89.9 | Glänzend, sehr hell, dunklerer Flop |
| Beispiel 2b | Fe 1 | Al 2 | 30 | 70 | 36,2 | 135 | 88,8 | Glänzend, sehr hell, dunkler Flop |
| Beispiel 2c | Fe 1 | Al 2 | 50 | 50 | 42,0 | 132 | 86,7 | Glänzend, hell, sehr dunkler Flop Glänzend, hell, . |
| Beispiel 2d | Fe 1 | Al 2 | 70 | 30 | 50.0 | 108 | 85.6 | Glänzend, mittelhell, sehr dunkler Flop |
| Beispiel 2e | Fe 1 | Al 2 | 90 | 10 | 61,9 | 100 | 75,2 | Glänzend, mittelhell, sehr starker dunkler Flop |
| Vergleichsbeispiel 1 | Fe 1 | --- | 100 | 0 | 70,0 | 81,8 | 67,0 | Glänzend, dunkel metallisch, sehr dunkler Flop |
| Vergleichsbeispiel 4 | --- | Al 3 | 0 | 100 | 10,0 | 255 | 85,1 | Extrem hochglänzend, sehr hell, guter Flop |

EP 2 303 969 B1

(fortgesetzt)

| Proben | Eiseneffektpigment | Aluminiumeffektpigment | Anteil Eiseneffektpigment in Mischung [Gew.-%] | Anteil Aluminiumeffektpigment in Mischung [Gew.-%] | Anteil Metalleffektpigmente in der "Paste" in Gew.-% | Glanz 60° | L*diffus | Subjektiver Eindruck |
|---|---|---|---|---|---|---|---|---|
| Beispiel 3a | Fe 1 | Al 3 | 10 | 90 | 10,9 | 279 | 84,8 | Extrem hochglänzend, sehr hell, dunklerer Flop |
| Beispiel 3b | Fe 1 | Al 3 | 30 | 70 | 13,5 | 251 | 84,3 | Extrem hochglänzend, sehr hell, dunkler Flop |
| Beispiel 3c | Fe 1 | Al 3 | 50 | 50 | 17,5 | 224 | 83,4 | Hochglänzend, sehr hell, sehr dunkler Flop |
| Beispiel 3d | Fe 1 | Al 3 | 70 | 30 | 25,0 | 205 | 82,0 | Hochglänzend, hell, sehr dunkler Flop |
| Beispiel 3e | Fe 1 | Al 3 | 90 | 10 | 43,8 | 133 | 77,8 | Glänzend, mittelhell, sehr starker dunkler Flop |
| Vergleichsbeispiel 1 | Fe 1 | --- | 100 | 0 | 70,0 | 81,8 | 67,0 | Glänzend, dunkel metallisch, sehr dunkler Flop |
| Vergleichsbeispiel 5 | --- | Al 4 | 0 | 100 | 10,0 | 166 | 89,9 | Hochglanzend, sehr hell, guter Flop, leicht gelblich |

18

(fortgesetzt)

| Proben | Eiseneffektpigment | Aluminiumeffektpigment | Anteil Eiseneffektpigment in Mischung [Gew.-%] | Anteil Aluminiumeffektpigment in Mischung [Gew.-%] | Anteil Metalleffektpigmente in der "Paste" in Gew.-% | Glanz 60° | L*diffus | Subjektiver Eindruck |
|---|---|---|---|---|---|---|---|---|
| Beispiel 4a | Fe 1 | Al 4 | 10 | 90 | 10,9 | 167 | 88,8 | Hochglänzend, sehr hell, dunklerer Flop |
| Beispiel 4b | Fe 1 | Al 4 | 30 | 70 | 13,5 | 156 | 87,4 | Hochglanzend, sehr hell, dunkler Flop |
| Beispiel 4c | Fe 1 | Al 4 | 50 | 50 | 17,5 | 156 | 88,0 | Horhglänzend, hell, sehr dunkler Flop |
| Beispiel 4d | Fe 1 | Al 4 | 70 | 30 | 25,0 | 128 | 81,9 | Glänzend, mittelhell, sehr dunkler Flop |
| Beispiel 4e | Fe 1 | Al 4 | 90 | 10 | 43,8 | 118 | 79,7 | Glänzend, mittelhell, sehr starker dunkler Flop |
| Vergleichsbeispiel 1 | Fe 1 | --- | 100 | 0 | 70,0 | 81,8 | 67,0 | Glänzend, dunkel metallisch, sehr dunkler Flop |

Alle Applikationen der erfindungsgemäßen Beispiele (Eiseneffekt- und Aluminiumeffektpigmentmischung) wie auch der Vergleichsbeispiele (Aluminium - oder Eiseneffektpigmente) weisen einen hohen Glanz und ein weitgehend strukturloses metallisches Erscheinungsbild auf. Die Unterschiede treten vor allem im Flopverhalten und der Helligkeit auf.

Der Glanz des reinen Eisenpigmentes (Vergleichsbeispiel 1) ist viel niedriger als die Applikationen der reinen Aluminiumpigmente. Dies ist zu erwarten, da die Reflexion im optischen Bereich (400 - 800 nm) von Eisen viel niedriger ist als von Aluminium. Demgemäß erscheint auch das reine Eisen sehr dunkel im Gegensatz zu den sehr hellen Aluminiumpigmentapplikationen.

überraschenderweise jedoch zeigen die erfindungsgemäßen Mischungen bei niedrigeren Konzentrationen an Eiseneffektpigmenten einen teilweise höheren bis vergleichbaren Glanz als die Vergleichsapplikationen mit reinen Aluminiumeffektpigmenten. Dieses Ergebnis ist aufgrund der physikalisch-optischen Eigenschaften der Ausgangsmaterialien nicht zu erwarten.

Bei zunehmendem Anteil der Eiseneffektpigmente nimmt der Glanz dann ab. Selbst bei den 90:10 (Fe/Al) Mischungen (Angabe in Gewichtsteilen) liegen die Werte jedoch noch weit oberhalb der der reinen Eiseneffektpigmente.

Bei steigendem Anteil von Eiseneffektpigmenten beobachtet man jedoch einen zunehmenden sehr starken, "dunklen" Helligkeitsflop. Dies bedeutet, dass die Helligkeit der Applikation sehr stark bei zunehmenden Betrachtungswinkeln/Beobachtungswinkeln in Relation zum Glanzwinkel abnimmt. Zwar weisen die Applikationen mit reinen Aluminiumpigmenten auch einen hohen Helligkeitsflop auf, jedoch wird der Eindruck bei höheren Winkeln nicht derart dunkel. Es ist diese unerwartete Kombination von hohem Glanz und dunklem Flop, der die erfindungsgemäße Metalleffektpigmentmischung auszeichnet.

**Fe 2; Vergleichsbeispiel 6:**

Eine Mischung aus 30 g reduziertem "Carbonyleisenpulver SU" der Fa. BASF AG Ludwigshafen (mittlere Partikelgröße $d_{Grieb,50}$ =1,9 $\mu$m, $d_{Grieb,10}$-Wert 0,9 $\mu$m, $d_{Grieb,90}$-Wert 3,3 $\mu$m, Eisengehalt 99,8%) und 60 g Testbenzin sowie 6,0 g Ölsäure wurden in eine Topfmühle (Länge: 32 cm, Durchmesser: 19 cm) gefüllt und die Mühle geschlossen. Anschließend wurde 24 h lang mit 2 kg Stahlkugeln (Durchmesser: 0,8 mm) mit 45 U/min vermahlen. Das aus der Mühle entleerte Vermahlungsprodukt wurde mit Testbenzin ausgewaschen und mittels einer Siebung (25 $\mu$m) von den Mahlkugeln getrennt. Das Siebgut wurde mittels einer Nutsche weitgehend von Testbenzin befreit und anschließend mit Testbenzin in einem Labormischer angepastet (ca. 65 Gew.-% Feststoffanteil).

Die so erhaltene Eiseneffektpigmentpaste wurde in einer Tiefdruckfarbe entsprechend der kommerziell erhältlichen Ultrastar® GX-2807 (Fa. Eckart) eingestellt. Ultrastar® GX-2807 ist eine Tiefdruckfarbe, die normalerweise PVD-Aluminiumeffektpigmente enthält und speziell für die Anwendung auf Folien entwickelt wurde. Hierbei handelt es sich um ein Polyvinylbutyral-basierendes System. Die Viskosität im Ford-DIN4-Becher wurde unter Zugabe von Methoxypropanol auf ca. 20 sec eingestellt. Der Metalleffektpigmentgehalt (Eisen) betrug 7,3 Gew.-% und der gesamte Festkörpergehalt betrug 11,0 Gew.-%, jeweils bezogen auf das Gesamtgewicht der Formulierung. Als Lösemittel wurde ein Gemisch von Methoxypropanol, Isopropanol und Ethylacetat verwendet.

**Al 5; Vergleichsbeispiel 7:**

Es wurden die Aluminiumeffektpigmente Al 2 des Vergleichsbeispiels 3 verwendet. Die Aluminiumeffektpigmentpaste wurde in einer Tiefdruckfarbe entsprechend der Ultrastar® GX-2807 (Fa. Eckart) eingestellt.
Die Viskosität im Ford-DIN4-Becher wurde unter Zugabe von Methoxypropanol auf ca. 20 sec eingestellt. Der Metalleffektpigmentgehalt betrug 4,6 Gew.-% und der gesamte Festkörpergehalt 6,7 Gew.-%, jeweils bezogen auf das Gesamtgewicht der Formulierung. Als Lösemittel wurde ein Gemisch von Methoxypropanol, Isopropanol und Ethylacetat verwendet.

**Al 6; Vergleichsbeispiel 8:**

Es wurden die Aluminiumeffektpigmente (PVD) Al 3 des Vergleichsbeispiels 4 verwendet, allerdings in Form einer Ethanol-Dispersion. Die Pigmentdispersion wurde in einer Tiefdruckfarbe entsprechend der kommerziell erhältlichen Platinstar™ GX-2901 (Fa. Eckart) eingearbeitet. Platinstar™ GX-2901 ist eine Tiefdruckfarbe, die normalerweise dünne Aluminiumeffektpigmente enthält und speziell für die Anwendung auf Folien entwickelt wurde. Als Lösemittel wurde ein Gemisch von Methoxypropanol, Isopropanol und Ethylacetat verwendet.
Die Viskosität im Ford-DIN4- Becher wurde unter Zugabe von Methoxypropanol auf ca. 20 sec eingestellt. Der Metalleffektpigmentgehalt betrug 7,7 Gew.-% und der gesamte Festkörpergehalt betrug 11 Gew.-%, jeweils bezogen auf das Gesamtgewicht der Formulierung.

**Erfindungsgemäße Beispiele 5 a - e:**

Erfindungsgemäße Mischungen wurden aus den Tiefdruckfarben von Fe 2 (Vergleichsbeispiel 6) und Al 5 (Vergleichsbeispiel 7) hergestellt. Die genauen Mischungsverhältnisse der beiden Metalleffektpigmente sind der Tabelle 3 zu entnehmen.

**Erfindungsgemäße Beispiele 6 a - e:**

Erfindungsgemäße Mischungen wurden aus den Tiefdruckfarben von Fe 2 (Vergleichsbeispiel 6) und Al 6 (Vergleichsbeispiel 8) hergestellt. Die genauen Mischungsverhältnisse der beiden Metalleffektpigmente sind der Tabelle 3 zu entnehmen.

Die Tiefdruckfarben wurden auf folgende Untergründe appliziert und getrocknet:

a) Mellinex 400 Folien (Fa. Pütz GmbH + Co. Folien KG, D-65232 Taunusstein) mittels einer 24 μm Rakel. Hierdurch wurden Folienkonterapplikationen erstellt.
b) Papier (Labelcar WS HG 5, Fa. Cham Paper Group, CH-6330 Cham) mittels einer Rakel mit 12 μm Rakeltiefe.
c) Durch Rastertiefdruck (Erichsen Testing Equipment, K 303 Control Coater, Modell 625 mit einer 5 μm Raster-keilstaffelung von 20 bis 60 μm) auf Papier (Labelcar WS HG 5).

Von den Rakelabzügen auf Folien und auf Papier wurden Glanzmessungen und Messungen der diffusen Helligkeit durchgeführt. Die Ergebnisse sind in Tabelle 3 dargestellt.

**Tab. 3: Mischungsverhältnisse und optische Abprüfungen der Beispiele und Vergleichsbeispiele der Druckfarben**

| Proben | Eiseneffektpigment | Aluminiumeffektpigment | Anteil Eiseneffektpigment in Mischung [Gew.-%] | Anteil Aluminiumeffektpigment in Mischung [Gew.-%] | Glanz 60°Folie Mellinex 400 | Glanz 60° 12 μm Papier | $L_{diffus}^*$ Folie Mellinex 400 | $L_{diffus}^*$ 12 μm Papier |
|---|---|---|---|---|---|---|---|---|
| Vergleichsbeispiel 7 | --- | Al 5 | 0 | 100 | 571 | 174 | 92,6 | 91,3 |
| Beispiel 5a | Fe 2 | Al 5 | 10 | 90 | 561 | 154 | 91,5 | 89,5 |
| Beispiel 5b | Fe 2 | Al 5 | 30 | 70 | 487 | 143 | 88,6 | 86,4 |
| Beispiel 5c | Fe 2 | Al 5 | 50 | 50 | 431 | 119 | 805 | 81,7 |
| Beispiel 5d | Fe 2 | Al 5 | 70 | 30 | 370 | 98 | 78,8 | 75,4 |
| Beispiel 5e | Fe 2 | Al 5 | 90 | 10 | 255 | 68 | 69,8 | 65,9 |
| Vergleichsbeispiel 6 | Fe 2 | --- | 100 | 0 | 201 | 52 | 61,8 | 59,5 |
| Vergleichsbeispiel 8 | --- | Al 6 | 0 | 100 | 687 | 347 | 91,7 | 90,7 |
| Beispiel 6a | Fe 2 | Al 6 | 10 | 90 | 668 | 322 | 90,8 | 89,6 |
| Beispiel 6b | Fe 2 | Al 6 | 30 | 70 | 604 | 269 | 88,9 | 87,0 |
| Beispiel 6c | Fe 2 | Al 6 | 50 | 50 | 529 | 202 | 86,1 | 82,8 |
| Beispiel 6d | Fe 2 | Al 6 | 70 | 30 | 426 | 144 | 80,9 | 77,1 |
| Beispiel 6e | Fe 2 | Al 6 | 90 | 10 | 291 | 83 | 71,5 | 67,5 |
| Vergleichsbeispiel 6 | Fe 2 | --- | 100 | 0 | 201 | 52 | 61,7 | 58,9 |

Bei den erfindungsgemäßen Mischungen von Eisen- und Aluminiumeffektpigmenten liegt der Glanz sowie die diffuse Helligkeit $L^*_{diffus}$ stets zwischen den Extremwerten der reinen Aluminiumeffektpigmente und der reinen Eiseneffektpigmente. Mit zunehmendem Eisenanteil werden die Druckapplikationen dunkler, weisen jedoch noch einen vergleichsweise hohen Glanz auf. Der Farbflop geht dabei immer stärker ins Dunkle, was einen interessanten Effekt darstellt. Auffallend ist, dass der Glanz auch schon beiden Mischungen mit geringen Aluminiumeffektpigmentanteilen (10 % und 30 %) sehr stark ansteigt im Vergleich zur Applikation mit reinen Eiseneffektpigmenten.

Einige erfindungsgemäße Mischungen - typischerweise jene mit einem Gehalt an Eiseneffektpigmenten von 30 bis 70 Gew.-% - weisen überraschenderweise einen bislang nicht erhältlichen sehr stark metallischen, harten Effekt auf, den die reinen Eisen- oder Aluminiumeffektpigmente nicht aufweisen. Dieser neue Effekt ist farbmetrisch nicht vermessbar und kann daher nur subjektiv beurteilt werden.

Der Effekt ist vollkommen vergleichbar mit dem Eindruck hochglänzender, polierter makroskopischer (d.h. nicht mit Effektpigmenten pigmentierten) metallischen Oberflächen wie beispielsweise Chromstahloberflächen.

Aufgrund der unterschiedlichen Mischungsverhältnisse von Eisen- und Aluminiumeffektpigmenten kann jedoch bei den vorliegenden erfindungsgemäßen Mischungen die Helligkeit sehr gut variiert werden und so neue optische Effekte kreiert werden.

**Patentansprüche**

1.  Mischung von Metalleffektpigmenten,
    **dadurch gekennzeichnet,**
    **dass** die Mischung
    eisenhaltige Metalleffektpigmente und
    Aluminiumeffektpigmente umfasst, wobei die eisenhaltigen Metalleffektpigmente bei einer über Dickenauszählung mit Rasterelektronenmikroskopie (REM) ermittelten Dickenverteilung in der Darstellung als Summenhäufigkettsverteitung einen $h_{Fe,50}$-Wert aus einem Bereich von 10 bis 200 nm aufweisen.

2.  Mischung von Metalleffektpigmenten nach Anspruch 1,
    **dadurch gekennzeichnet,**
    **dass** die eisenhaltigen Metalleffektpigmente aus der Gruppe, die aus Stahlplättchen oder Eiseneffektpigmenten besteht, ausgewählt sind.

3.  Mischung von Metalleffektpigmenten nach einem der vorstehenden Ansprüche,
    **dadurch gekennzeichnet,**
    **dass** die eisenhaltigen Metalleffektpigmente einen $h_{Fe,50}$-Wert aus einem Bereich von 15 bis 100 nm aufweisen.

4.  Mischung von Metalleffektpigmenten nach einem der vorstehenden Ansprüche,
    **dadurch gekennzeichnet,**
    **dass** die Aluminiumeffektpigmente bei einer über Dickenauszählung mit Rasterelektronenmikroskopie (REM) ermittelten Dickenverteilung in der Darstellung als Summenhäufigkeitsverteilung einen $h_{Al,50}$-Wert aus einem Bereich von 15 bis 150 nm aufweisen.

5.  Mischung von Metalleffektpigmenten nach einem der vorstehenden Ansprüche,
    **dadurch gekennzeichnet,**
    **dass** die gesamte Metalleffektpigmentmischung einen $h_{M,50}$-Wert aus einem Bereich von 15 bis 100 nm aufweist.

6.  Mischung von Metalleffektpigmenten nach einem der vorstehenden Ansprüche,
    **dadurch gekennzeichnet,**
    **dass** die eisenhaltigen Metalleffektpigmente einen $h_{Fe,50}$-Wert aus einem Bereich von 15 bis 55 nm aufweisen.

7.  Mischung von Metalleffektpigmenten nach einem der vorstehenden Ansprüche,
    **dadurch gekennzeichnet,**
    **dass** die Aluminiumeffektpigmente einen $h_{Al,50}$-Wert aus einem Bereich von 20 bis 60 nm aufweisen.

8.  Mischung von Metalleffektpigmenten nach einem der vorstehenden Ansprüche,
    **dadurch gekennzeichnet,**
    **dass** die eisenhaltigen Metalleffektpigmente bei einer über Dickenauszählung mit Rasterelektronenmikroskopie (REM) ermittelten Dickenverteilung in der Darstellung als Summenhäufigkeitsverteilung einen $h_{Fe,90}$-Wert aus einem Bereich von 25 bis 60 nm aufweisen.

9. Mischung von Metalleffektpigmenten nach einem der vorstehenden Ansprüche,
**dadurch gekennzeichnet,**
**dass** die Aluminiumeffektpigmente einen $h_{Al,90}$-Wert aus einem Bereich von 25 bis 80 nm aufweisen.

10. Mischung von Metalleffektpigmenten nach einem der vorstehenden Ansprüche,
**dadurch gekennzeichnet,**
**dass** die Aluminiumeffektpigmente einen Dickenspan, der nach der Formel

$$\Delta h_{Al} = 100 \times (h_{Al,90} - h_{Al,10})/h_{Al,50} \text{ berechnet wird,}$$

von 25 bis unter 70 % aufweisen.

11. Mischung von Metalleffektpigmenten nach einem der vorstehenden Ansprüche,
**dadurch gekennzeichnet,**
**dass** der Anteil von eisenhaltigen Metalleffektpigmenten 5 bis 95 Gew.-%, bezogen auf das Gesamtgewicht an eisen- und Aluminiumeffektpigmenten, beträgt.

12. Mischung von Metalleffektpigmenten nach einem der vorstehenden Ansprüche,
**dadurch gekennzeichnet,**
**dass** die Mischung ein Pigmentkonzentrat mit einem Gehalt an Metalleffektpigmenten von 30 bis 65 Gew.-% und einem Lösemittelgehalt von 35 bis 70 Gew.-%, jeweils bezogen auf das Gesamtgewicht des Pigmentkonzentrates, umfasst.

13. Verfahren zur Herstellung einer Mischung von Metalleffektpigmenten nach einem der vorherigen Ansprüche,
**dadurch gekennzeichnet,**
**dass** es folgenden Schritt umfasst:

Mischen von eisenhaltigen Metalleffektpigmenten, die bei einer über Dickenauszählung mit Rasterelektronenmikroskopie (REM) ermittelten Dickenverteilung in der Darstellung als Summenhäufigkeitsverteilung einen $h_{Fe,50}$-Wert aus einem Bereich von 10 bis 200 nm aufweisen, mit Aluminiumeffektpigmenten.

14. Verwendung der Mischung von Metalleffektpigmenten nach einem der Ansprüche 1 bis 12 in Druckfarben, vorzugsweise in Sieb-, Flexo-, Tiefdruckfarben und in Sicherheitsdruckfarben, Coatings, kosmetischen Formulierungen, Kunststoffen, Keramiken und Gläsern.

15. Formulierung, enthaltend eine Mischung von Metalleffektpigmenten nach einem der Ansprüche 1 bis 12.


**Claims**

1. Mixture of metal effect pigments,
**characterised in that**
the mixture comprises
iron-containing metal effect pigments and
aluminium effect pigments, and on the basis of a thickness distribution determined by a thickness count by means of raster electron microscopy (REM) presented as a cumulative frequency distribution, the iron-containing metal effect pigments have an $h_{Fe,50}$ value in a range of from 10 to 200 nm.

2. Mixture of metal effect pigments as claimed in claim 1,
**characterised in that**
the iron-containing metal effect pigments are selected from the group comprising steel platelets or iron effect pigments.

3. Mixture of metal effect pigments as claimed in one of the preceding claims,

**characterised in that**
the iron-containing metal effect pigments have an $h_{Fe,50}$ value in a range of from 15 to 100 nm.

4. Mixture of metal effect pigments as claimed in one of the preceding claims,
   **characterised in that**
   on the basis of a thickness distribution determined by a thickness count by means of raster electron microscopy (REM) presented as a cumulative frequency distribution, the aluminium effect pigments have an $h_{Al,50}$ value in a range of from 15 to 150 nm.

5. Mixture of metal effect pigments as claimed in one of the preceding claims,
   **characterised in that**
   the total metal effect pigment mixture has an $h_{M,50}$ value in a range of from 15 to 100 nm.

6. Mixture of metal effect pigments as claimed in one of the preceding claims,
   **characterised in that**
   the iron-containing metal effect pigments have an $h_{Fe,50}$ value in a range of from 15 to 55 nm.

7. Mixture of metal effect pigments as claimed in one of the preceding claims,
   **characterised in that**
   the aluminium effect pigments have an $h_{41,50}$ value in a range of from 20 to 60 nm.

8. Mixture of metal effect pigments as claimed in one of the preceding claims,
   **characterised in that**
   on the basis of a thickness distribution determined by a thickness count by means of raster electron microscopy (REM) presented as a cumulative frequency distribution, the iron-containing metal effect pigments have an $h_{Fe,50}$ value in a range of from 25 to 60 nm.

9. Mixture of metal effect pigments as claimed in one of the preceding claims,
   **characterised in that**
   the aluminium effect pigments have an $h_{41,50}$ value in a range of from 25 to 80 nm.

10. Mixture of metal effect pigments as claimed in one of the preceding claims,
    **characterised in that**
    the aluminium effect pigments have a thickness span of from 25 to less than 70 % calculated by the formula

$$\Delta h_{Al} = 100 \times (h_{Al,90}-h_{Al,10})/h_{Al,50}.$$

11. Mixture of metal effect pigments as claimed in one of the preceding claims,
    **characterised in that**
    the proportion of iron-containing metal effect pigments is 5 to 95 % by weight relative to the total weight of iron and aluminium effect pigments.

12. Mixture of metal effect pigments as claimed in one of the preceding claims,
    **characterised in that**
    the mixture comprises a pigment concentrate containing 30 to 65 % by weight of metal effect pigments and a solvent content of 35 to 70 % by weight relative to the total weight of the pigment concentrate in each case.

13. Method of producing a mixture of metal effect pigments as claimed in one of the preceding claims,
    **characterised in that**
    it comprises the following step:

    mixing iron-containing metal effect pigments which, on the basis of a thickness distribution determined by a thickness count by means of raster electron microscopy (REM) presented as a cumulative frequency distribution, have a $h_{Fe,50}$ value in a range of from 10 to 200 nm with aluminium effect pigments.

14. Use of the mixture of metal effect pigments as claimed in one of claims 1 to 12 in printing inks, preferably in screen printing, flexographic printing, gravure printing inks and in security printing inks, coatings, cosmetic formulations, plastics, ceramics and glasses.

15. Formulation containing a mixture of metal effect pigment as claimed in one of claims 1 to 12.

**Revendications**

1. Mélange de pigments métalliques à effet, **caractérisé en ce que** le mélange comprend des pigments métalliques à effet contenant du fer et des pigments d'aluminium à effet, les pigments métalliques à effet contenant du fer présentant une valeur $h_{Fe,50}$ dans une plage allant de 10 à 200 nm dans une distribution des épaisseurs déterminée par décompte des épaisseurs par microscopie électronique à balayage (MEB), dans la représentation sous la forme d'une distribution cumulée des fréquences.

2. Mélange de pigments métalliques à effet selon la revendication 1, **caractérisé en ce que** les pigments métalliques à effet contenant du fer sont choisis dans le groupe constitué par les plaquettes d'acier ou les pigments de fer à effet.

3. Mélange de pigments métalliques à effet selon l'une quelconque des revendications précédentes, **caractérisé en ce que** les pigments métalliques à effet contenant du fer présentent une valeur $h_{Fe,50}$ dans une plage allant de 15 à 100 nm.

4. Mélange de pigments métalliques à effet selon l'une quelconque des revendications précédentes, **caractérisé en ce que** les pigments d'aluminium à effet présentent une valeur $h_{Al,50}$ dans une plage allant de 15 à 150 nm dans une distribution des épaisseurs déterminée par décompte des épaisseurs par microscopie électronique à balayage (MEB), dans la représentation sous la forme d'une distribution cumulée des fréquences.

5. Mélange de pigments métalliques à effet selon l'une quelconque des revendications précédentes, **caractérisé en ce que** l'ensemble du mélange de pigments métalliques à effet présente une valeur $h_{M,50}$ dans une plage allant de 15 à 100 nm.

6. Mélange de pigments métalliques à effet selon l'une quelconque des revendications précédentes, **caractérisé en ce que** les pigments métalliques à effet contenant du fer présentent une valeur $h_{Fe,50}$ dans une plage allant de 15 à 55 nm.

7. Mélange de pigments métalliques à effet selon l'une quelconque des revendications précédentes, **caractérisé en ce que** les pigments d'aluminium à effet présentent une valeur $h_{Al,50}$ dans une plage allant de 20 à 60 nm.

8. Mélange de pigments métalliques à effet selon l'une quelconque des revendications précédentes, **caractérisé en ce que** les pigments métalliques à effet contenant du fer présentent une valeur $h_{Fe,90}$ dans une plage allant de 25 à 60 nm dans une distribution des épaisseurs déterminée par décompte des épaisseurs par microscopie électronique à balayage (MEB), dans la représentation sous la forme d'une distribution cumulée des fréquences.

9. Mélange de pigments métalliques à effet selon l'une quelconque des revendications précédentes, **caractérisé en ce que** les pigments d'aluminium à effet présentent une valeur $h_{Al,90}$ dans une plage allant de 25 à 80 nm.

10. Mélange de pigments métalliques à effet selon l'une quelconque des revendications précédentes, **caractérisé en ce que** les pigments d'aluminium à effet présentent une étendue d'épaisseur, calculée selon la formule

$$\Delta h_{Al} = 100 \times (h_{Al,90} - h_{Al,10})/h_{Al,50},$$

de 25 à moins de 70 %.

11. Mélange de pigments métalliques à effet selon l'une quelconque des revendications précédentes, **caractérisé en ce que** la proportion de pigments métalliques à effet contenant du fer est de 5 à 95 % en poids par rapport au poids total des pigments de fer et d'aluminium à effet.

**12.** Mélange de pigments métalliques à effet selon l'une quelconque des revendications précédentes, **caractérisé en ce que** le mélange comprend un concentré de pigments ayant une teneur en pigments métalliques à effet de 30 à 65 % en poids et une teneur en solvant de 35 à 70 % en poids, à chaque fois par rapport au poids total du concentré de pigment.

**13.** Procédé de fabrication d'un mélange de pigments métalliques à effet selon l'une quelconque des revendications précédentes, **caractérisé en ce qu'**il comprend l'étape suivante :

le mélange de pigments métalliques à effet contenant du fer, qui présentent une valeur $h_{Fe,50}$ dans une plage allant de 10 à 200 nm dans une distribution des épaisseurs déterminée par décompte des épaisseurs par microscopie électronique à balayage (MEB), dans la représentation sous la forme d'une distribution cumulée des fréquences, avec des pigments d'aluminium à effet.

**14.** Utilisation du mélange de pigments métalliques à effet selon l'une quelconque des revendications 1 à 12 dans des encres d'impression, de préférence des encres de sérigraphie, de flexographie, d'impression en creux, et dans des encres d'impression de sécurité, des revêtements, des formulations cosmétiques, des plastiques, des céramiques et des verres.

**15.** Formulation, contenant un mélange de pigments métalliques à effet selon l'une quelconque des revendications 1 à 12.

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 1251152 A1
- EP 1251153 A1
- US 5630877 A
- EP 0673980 A
- US 20030178734 A1
- DE 102004063433 A1
- EP 1621586 A1
- WO 2004087816 A2
- WO 2005118722 A1
- DE 102006006716 A1
- DE 10315775 A1
- DE 10114446 A1

**In der Beschreibung aufgeführte Nicht-Patentliteratur**

- **HOLLEMANN ; WIBERG.** Lehrbuch der Anorganischen Chemie. Walter de Gruyter & Co Verlag, 1985, 127